(19) Europäisches Patentamt
European Patent Office
Office européen des brevets

(11) EP 2 814 885 B1

(12) EUROPÄISCHE PATENTSCHRIFT

(45) Veröffentlichungstag und Bekanntmachung des Hinweises auf die Patenterteilung:
**31.01.2018 Patentblatt 2018/05**

(21) Anmeldenummer: **13704907.8**

(22) Anmeldetag: **07.02.2013**

(51) Int Cl.:
***C08L 57/04*** (2006.01) ***C08L 101/12*** (2006.01)
***C08L 97/00*** (2006.01) ***D04H 1/64*** (2012.01)
***D04H 1/587*** (2012.01) ***D06N 5/00*** (2006.01)
***C08L 51/06*** (2006.01) ***C08F 2/22*** (2006.01)
***C08F 257/02*** (2006.01) ***C08F 8/44*** (2006.01)
***C08F 212/08*** (2006.01)

(86) Internationale Anmeldenummer:
**PCT/EP2013/052380**

(87) Internationale Veröffentlichungsnummer:
**WO 2013/120752 (22.08.2013 Gazette 2013/34)**

(54) **WÄSSRIGE BINDEMITTELZUSAMMENSETZUNG**

AQUEOUS BINDER COMPOSITION

COMPOSITION DE LIANTS AQUEUSE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.02.2012 EP 12155409**

(43) Veröffentlichungstag der Anmeldung:
**24.12.2014 Patentblatt 2014/52**

(73) Patentinhaber: **BASF SE**
**67056 Ludwigshafen am Rhein (DE)**

(72) Erfinder:
- **KRÜGER, Christian**
**67346 Speyer (DE)**
- **SCHÜTZE, Ulrich**
**67550 Worms (DE)**
- **MICHL, Kathrin**
**67063 Ludwigshafen (DE)**
- **KALBE, Michael**
**69469 Weinheim (DE)**
- **PFAU, Andreas**
**67061 Ludwigshafen (DE)**
- **SCHILLING, Holger**
**69488 Birkenau (DE)**
- **BRAND, Christian**
**67310 Hettenleidelheim (DE)**
- **SEIBERT, Marcus**
**68647 Biblis (DE)**

(74) Vertreter: **BASF IP Association**
**BASF SE**
**G-FLP-C006**
**67056 Ludwigshafen (DE)**

(56) Entgegenhaltungen:
**EP-A1- 0 536 588** **DE-A1- 19 735 959**
**US-A1- 2009 169 867** **US-A1- 2009 170 978**

Bemerkungen:
Die Akte enthält technische Angaben, die nach dem Eingang der Anmeldung eingereicht wurden und die nicht in dieser Patentschrift enthalten sind.

EP 2 814 885 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Gegenstand der vorliegenden Erfindung ist eine wässrige Bindemittelzusammensetzung, enthaltend als wesentliche Bindemittelkomponenten

a) wenigstens ein Polymerisat P, aufgebaut aus

| | |
|---|---|
| ≥ 0,1 und ≤ 10 Gew.-% | wenigstens einer monoethylenisch ungesättigten Verbindung mit wenigstens einer siliziumhaltigen Gruppe, einer Epoxy-, Hydroxyalkyl-, N-Methylol- oder Carbonylgruppe und/oder wenigstens einer Verbindung, welche wenigstens zwei nichtkonjugierte ethylenisch ungesättigte Gruppen aufweist (Monomere A) |
| ≥ 0 und < 5 Gew.-% | wenigstens einer monoethylenisch ungesättigten $C_3$- bis $C_6$-Mono- und/oder $C_4$-$C_6$-Dicarbonsäure sowie deren Salze und Anhydride (Monomere B), und |
| > 85 und ≤ 99,9 Gew.-% | weiterer, sich von den Monomeren A und B unterscheidender, ethylenisch ungesättigter Verbindungen, wobei diese in Art und Menge so gewählt werden, dass ein allein aus diesen ethylenisch ungesättigten Verbindungen in einpolymerisierter Form aufgebautes Polymerisat eine Glasübergangstemperatur im Bereich ≥ 10 und ≤ 50 °C aufweisen würde (Monomere C), |

in einpolymerisierter Form, wobei sich die Mengen der Monomeren A bis C auf 100 Gew.-% aufsummieren, und

b) wenigstens eine Ligninverbindung L, wobei deren Menge so bemessen ist, dass sie ≥ 10 und ≤ 60 Gew.-Teile pro 100 Gew.-Teilen Polymerisat P beträgt.

Ferner umfasst die Erfindung die Verwendung der wässrigen Bindemittelzusammensetzung als Bindemittel für körnige und/oder faserförmige Substrate, ein Verfahren zur Herstellung eines Formkörpers aus körnigen und/oder faserförmigen Substraten unter Verwendung der wässrigen Bindemittelzusammensetzung sowie die Verwendung der erhaltenen Formkörper zur Herstellung bitumierter Dachbahnen.

Die Verfestigung von faserförmigen und/oder körnigen Substraten, insbesondere in flächenförmigen Gebilden, wie beispielsweise Faservliesen, Faserplatten, Spanplatten oder komplexerer nichtflächiger Formteile etc., erfolgt häufig auf chemischem Weg unter Verwendung eines polymeren Bindemittels. Zur Erhöhung der Festigkeit, insbesondere der Reißkraft sowie der Wärmestandfestigkeit, werden vielfach Bindemittel eingesetzt, welche Formaldehyd abspaltende Vernetzer enthalten. Damit besteht aber die Gefahr der unerwünschten Formaldehydemission.

Zur Vermeidung von Formaldehydemissionen wurden bereits zahlreiche Alternativen zu den bisher bekannten Bindemitteln vorgeschlagen. So sind aus der US-A 4,076,917 Bindemittel bekannt, welche Carbonsäure- oder Carbonsäureanhydrid-haltige Polymerisate und β-Hydroxyalkylamide als Vernetzer enthalten. Nachteilig ist die relativ aufwendige Herstellung der β-Hydroxyalkylamide.

Aus der EP-A-445578 sind Platten aus feinteiligen Materialien, wie beispielsweise Glasfasern bekannt, in denen Mischungen aus hochmolekularen Polycarbonsäuren und mehrwertigen Alkoholen, Alkanolaminen oder mehrwertigen Aminen als Bindemittel fungieren.

Aus der EP-A-583086 sind formaldehydfreie, wässrige Bindemittel zur Herstellung von Faservliesen, insbesondere Glasfaservliesen, bekannt. Die Bindemittel enthalten eine Polycarbonsäure mit mindestens zwei Carbonsäuregruppen und gegebenenfalls auch Anhydridgruppen sowie ein Polyol. Diese Bindemittel benötigen einen phosphorhaltigen Reaktionsbeschleuniger, um ausreichende Festigkeiten der Glasfaservliese zu erreichen. Es wird darauf hingewiesen, dass auf die Anwesenheit eines derartigen Reaktionsbeschleunigers nur verzichtet werden kann, wenn ein reaktives Polyol eingesetzt wird. Als hochreaktive Polyole werden β-Hydroxyalkylamide genannt.

Die EP-A-651088 beschreibt entsprechende Bindemittel für Substrate aus Cellulosefaser. Diese Bindemittel enthalten zwingend einen phosphorhaltigen Reaktionsbeschleuniger.

Die EP-A-672920 beschreibt formaldehydfreie Binde-, Imprägnier- oder Beschichtungsmittel, die ein Polymerisat, welches zu 2 bis 100 Gew.-% aus einer ethylenisch ungesättigten Säure oder einem Säureanhydrid als Comonomer aufgebaut ist und mindestens ein Polyol enthalten. Bei den Polyolen handelt es sich um substituierte Triazin-, Triazintrion-, Benzol- oder Cyclohexylderivate, wobei die Polyolreste sich stets in 1,3,5-Position der erwähnten Ringe befinden. Trotz einer hohen Trocknungstemperatur werden mit diesen Bindemitteln auf Glasfaservliesen nur geringe Nassreißfestigkeiten erzielt.

Die DE-A-2214450 beschreibt ein Copolymerisat, das aus 80 bis 99 Gew.-% Ethylen und 1 bis 20 Gew.-% Maleinsäureanhydrid aufgebaut ist. Das Copolymerisat wird, zusammen mit einem Vernetzungsmittel, in Pulverform oder in Dispersion in einem wässrigen Medium, zur Oberflächenbeschichtung verwendet. Als Vernetzungsmittel wird ein aminogruppenhaltiger Polyalkohol verwendet. Um eine Vernetzung zu bewirken, muss jedoch auf bis zu 300 °C erhitzt werden.

Aus der US-A 5,143,582 ist die Herstellung hitzebeständiger Vliesmaterialien unter Verwendung eines thermisch aushärtenden, hitzebeständigen Bindemittels bekannt. Das Bindemittel ist frei von Formaldehyd und wird erhalten

durch Mischen eines Carbonsäuregruppen, Carbonsäureanhydridgruppen oder Carbonsäuresalzgruppen aufweisenden Polymers und eines Vernetzers. Der Vernetzer ist ein β-Hydroxyalkylamid oder ein Polymer oder Copolymer davon. Das mit dem β-Hydroxyalkylamid vernetzbare Polymer ist beispielsweise aufgebaut aus ungesättigten Mono- oder Dicarbonsäuren, Salzen ungesättigter Mono- oder Dicarbonsäuren oder ungesättigten Anhydriden. Selbsthärtende Polymere werden erhalten durch Copolymerisation der β-Hydroxyalkylamide mit Carboxylgruppen enthaltenden Monomeren.

In der US-A 2004/82689 werden formaldehydfreie wässrige Bindemittel zur Herstellung von Faservliesen, insbesondere Glasfaservliesen, offenbart, welche essentiell aus einer polymeren Polycarbonsäure, einem Polyol und einem Imidazolin-Derivat bestehen. Die erhaltenen gebundenen Faservliese sollen eine reduzierte Wasseraufnahme aufweisen. Es werden unspezifisch sowohl stickstoffhaltige als auch stickstofffreie Polyole offenbart, wobei jedoch insbesondere das stickstoffhaltige Triethanolamin als bevorzugt beschrieben wird. Als spezifische Imidazolin-Derivate werden Umsetzungsprodukte aus einer Fettsäure mit Aminoethylethanolamin oder Diethylentriamin genannt. Die offenbarten wässrigen Bindemittelzusammensetzungen enthalten einen phosphorhaltigen Reaktionsbeschleuniger.

Gemäß der WO 99/09100 sind thermisch härtbare Zusammensetzungen und deren Verwendung als formaldehydfreie Bindemittel zur Herstellung von Formkörpern offenbart, welche neben einem Alkanolamin mit wenigstens zwei OH-Gruppen, ein Polymerisat 1, welches ≤ 5 Gew.-% und ein weiteres Polymerisat 2, welches ≥ 15 Gew.-% einer α,β-ethylenisch ungesättigten Mono- oder Dicarbonsäure in einpolymerisierter Form enthält.

Des Weiteren offenbart die WO10/34645 wässrige Bindemittelsysteme für körnige und/oder faserförmige Substrate, welche als wirksame Bestandteile ein Polymerisat 1, enthaltend ≥ 5,5 Gew.-% und ≤ 20 Gew.-% einer α,β-ethylenisch ungesättigten Mono- oder Dicarbonsäure in einpolymerisierter Form, ein Polymerisat 2, enthaltend ≥ 40 Gew.-% einer α,β-ethylenisch ungesättigten Mono- oder Dicarbonsäure in einpolymerisierter Form und eine Polyolverbindung mit wenigstens zwei Hydroxylgruppen.

In einer prioritätsbegründenden und nicht vorveröffentlichten europäischen Patentanmeldung mit Anmeldenummer 11154347.6 werden wässrige Bindemittel für körnige und/oder faserförmige Substrate offenbart, welche neben einem carbonsäuregruppenhaltigen Polymerisat und einer Polyolverbindung essentiell eine Salzverbindung enthalten. Diese salzhaltigen Bindemittelflotten wirken sich vorteilhaft auf die Nassreißkraft sowie die Reißkraft bei 180 °C der damit gebundenen Faservliese aus.

Ebenfalls in einer prioritätsbegründenden und nicht vorveröffentlichten europäischen Patentanmeldung mit Anmeldenummer 11159420.6 werden wässrige Bindemittel für körnige und/oder faserförmige Substrate offenbart, welche als essentielle Komponenten eine polymere Polycarbonsäure, eine stickstofffreie Polyolverbindung mit wenigstens zwei Hydroxygruppen sowie eine hydroxygruppenfreie organische Stickstoffverbindung mit einem pKB-Wert ≤ 7 enthalten.

Bei ligninhaltigen Bindemittelsystemen ist von folgendem Stand der Technik auszugehen.

So offenbart die US-A 2009/170978 Bindemittelsysteme auf Basis eines Gemisches von Polysacchariden, pflanzlichen Proteinen oder Ligninderivaten mit einem Emulsionspolymerisat, welches 5 bis 40 Gew.-% einer ethylenisch ungesättigten Carbonsäure in einpolymerisierter Form enthält. Die Polysaccharide und pflanzlichen Proteine werden vorteilhaft als nichtgelöste partikuläre Systeme eingesetzt. Nähere Ausführungen zur Verwendung von Ligninderivaten finden sich nicht.

In der US-A 2011/159768 werden wässrige Bindemittelsysteme offenbart, welche mit ethylenisch ungesättigten Carbonsäuren gepfropfte Ligninderivate und oxazolingruppenhaltige Polymere umfassen.

Dagegen offenbart die EP-A 2199320 Bindemittelsysteme auf Basis von Emulsionspolymerisaten und entfettetem Sojamehl sowie deren Verwendung zur Herstellung von Kompositmaterialien. In einer spezifischen Ausführungsform können die Bindemittel zusätzlich noch Lignin bzw. Ligninsulfonat enthalten.

Allerdings vermögen die mit den vorgenannten Zusammensetzungen hergestellten Formkörper, insbesondere Faservliese, nicht immer in allen mechanischen Eigenschaften, wie der Reißkraft sowie der Wärmestandfestigkeit voll zu befriedigen. Des Weiteren werden vom Markt verstärkt alternative formaldehydfreie bzw. -reduzierte Bindemittelsysteme auf Basis nachwachsender Rohstoffe angefragt.

Aufgabe der vorliegenden Erfindung war es, ein alternatives formaldehydfreies bzw. formaldehydreduziertes wässriges Bindemittelsystem auf Basis nachwachsender Rohstoffe für faserförmige und/oder körnige Substrate zur Verfügung zu stellen, durch welches bei Formkörpern, wie beispielsweise Faservliesen gleichwertige bzw. verbesserte mechanische Eigenschaften, wie insbesondere der Reißkraft sowie der Wärmestandfestigkeit resultieren.

Demgemäß wurde das eingangs definierte wässrige Bindemittel gefunden.

Als wesentliche Bindemittelkomponente wird ein Polymerisat P eingesetzt, welches aufgebaut aus

| | |
|---|---|
| ≥ 0,1 und ≤ 10 Gew.-% | wenigstens einer monoethylenisch ungesättigten Verbindung mit wenigstens einer siliziumhaltigen Gruppe, einer Epoxy-, Hydroxyalkyl-, N-Methylol- oder Carbonylgruppe und/oder wenigstens einer Verbindung, welche wenigstens zwei nichtkonjugierte ethylenisch ungesättigte Gruppen aufweist (Monomere A) |
| ≥ 0 und < 5 Gew.-% | wenigstens einer monoethylenisch ungesättigten $C_3$-bis $C_6$-Mono- und/oder $C_4$-$C_6$-Dicarbonsäure sowie deren Salze und Anhydride (Monomere B), und |
| > 85 und ≤ 99,9 Gew.-% | weiterer, sich von den Monomeren A und B unterscheidender, ethylenisch ungesättigter Verbindungen, wobei diese in Art und Menge so gewählt werden, dass ein allein aus diesen ethylenisch ungesättigten Verbindungen in einpolymerisierter Form aufgebautes Polymerisat eine Glasübergangstemperatur im Bereich ≥ 10 und ≤ 50 °C aufweisen würde (Monomere C), |

in einpolymerisierter Form, wobei sich die Mengen der Monomeren A bis C auf 100 Gew.-% aufsummieren.

Als Monomere A kommen alle monoethylenisch ungesättigten Verbindungen in Betracht, welche wenigstens eine siliziumhaltige Gruppe aufweisen. Mit besonderem Vorteil weisen die Monomeren A eine hydrolysierbare siliziumhaltige Gruppe auf. Vorteilhaft enthalten hydrolysierbare siliziumhaltige Gruppen wenigstens eine Alkoxygruppe oder ein Halogenatom, wie beispielsweise Chlor. Erfindungsgemäß vorteilhaft einsetzbare Monomere A sind in der WO 2008/150647, Seite 9, Zeilen 5 bis 25 offenbart. Durch ihre ausdrückliche Bezugnahme sollen diese siliziumgruppenhaltigen Monomere A als Bestandteil der vorliegenden Beschreibung angesehen werden. Mit besonderem Vorteil ist das siliziumgruppenhaltige Monomer A jedoch ausgewählt aus der Gruppe umfassend Vinyltriacetoxysilan, 3-Methacryloxypropyltrimethylsilan und Vinyltriethoxysilan.

Ferner kommen als Monomere A alle monoethylenisch ungesättigten Verbindungen in Betracht, welche wenigstens eine Epoxygruppe aufweisen, wie beispielsweise Vinyloxiran, Allyloxiran, Glycidylacrylat und/oder Glycidylmethacrylat, wobei Glycidylacrylat und/oder Glycidylmethacrylat besonders bevorzugt sind.

Als Monomere A können weiterhin alle Hydroxyalkyl-, vorteilhaft Hydroxy-$C_2$-$C_{10}$-alkyl-, bevorzugt Hydroxy-$C_2$-$C_4$-alkyl- und besonders vorteilhaft Hydroxy-$C_2$-$C_3$-alkylacrylate und/oder - methacrylate eingesetzt werden, wobei im Rahmen dieser Schrift auch die alkoxylierten, d.h. die mit Alkylenoxiden (im wesentlichen Ethylenoxid und Propylenoxid) umgesetzten Hydroxyalkylacrylate und/oder -methacrylate als Monomere A angesehen werden sollen. Mit Vorteil ist das hydroxyalkylgruppenhaltige Monomere A ausgewählt aus der Gruppe umfassend Diethylenglykolmonoacrylat, 4-Hydroxybutylacrylat, 3-Hydroxypropylacrylat, 2-Hydroxypropylacrylat, 2-Hydroxyethylacrylat, Diethylenglykolmonomethacrylat, 4-Hydroxybutylmethacrylat, 3-Hydroxypropylmethacrylat, 2-Hydroxypropylmethacrylat und 2-Hydroxyethylmethacrylat. Insbesondere vorteilhaft wird 2-Hydroxyethylacrylat und/oder 2-Hydroxyethylmethacrylat eingesetzt, wobei 2-Hydroxyethylacrylat besonders bevorzugt ist.

Als Monomere A kommen ferner alle monoethylenisch ungesättigten Verbindungen in Betracht, welche wenigstens eine N-Methylolgruppe aufweisen, wie beispielsweise N-Methylolamidverbindungen auf Basis von α,β-monoethylenisch ungesättigten $C_3$- bis $C_6$-Mono- oder Dicarbonsäureamiden, wie insbesondere N-Methylolacrylamid und N-Methylolmethacrylamid.

Als Monomere A können auch alle monoethylenisch ungesättigten Verbindungen eingesetzt werden, welche wenigstens eine Carbonylgruppe aufweisen, wie beispielsweise Vinylcarbonylverbindungen, wie beispielsweise Phenylvinylketon oder Dicarbonylverbindungen, wie insbesondere Diacetonacrylamid sowie Acetylacetoxyethylacrylat und Acetylacetoxyethylmethacrylat.

Zu den Monomeren A gehören ferner Verbindungen, welche wenigstens zwei nichtkonjugierte ethylenisch ungesättigte Gruppen, wie Vinyl-, Vinyliden- oder Alkenylgruppen aufweisen. Besonders vorteilhaft sind dabei die Di-Ester zweiwertiger Alkohole mit α,β-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und -dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylat und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylat, Tri-Ester dreiwertiger Alkohole mit α,β-monoethylenisch ungesättigten Monocarbonsäuren, wie beispielsweise Glyzerintriacrylat, Glyzerintrimethacrylat, Trimethylolpropantriacrylat, Trimethylolpropantrimethacrylat, sowie Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat. Insbesondere bevorzugt sind 1,4-Butylenglykoldiacrylat, Allylmethacrylat und/oder Divinylbenzol, wobei unter Divinylbenzol im Rahmen dieser Schrift 1,2-Divinylbenzol, 1,3-Divinylbenzol und/oder 1,4-Divinylbenzol verstanden werden soll.

Mit besonderem Vorteil ist das wenigstens eine Monomere A ausgewählt ist aus der Gruppe umfassend N-Methylolacrylamid, N-Methylolmethacrylamid, Glycidylacrylat, Glycidylmethacrylat, 2-Hydroxyethylacrylat, 2-Hydroxyethylmethacrylat, 1,4-Butylenglykoldiacrylat, Allylmethacrylat und/oder Divinylbenzol.

Das Polymerisat P enthält das wenigstens eine Monomere A in einer Menge von ≥ 0,1 und ≤ 10 Gew.-%, bevorzugt ≥ 0,1 und ≤ 5 Gew.-% und insbesondere bevorzugt ≥ 0,5 und ≤ 3 Gew.-% in einpolymerisierter Form.

Als Monomere B finden alle monoethylenisch ungesättigten $C_3$- bis $C_6$-Mono- und/oder $C_4$-$C_6$-Dicarbonsäuren Verwendung, wie beispielsweise Acrylsäure, Methacrylsäure, Ethylacrylsäure, Itaconsäure, Allylessigsäure, Crotonsäure, Vinylessigsäure, Fumarsäure, Maleinsäure oder 2-Methylmaleinsäure. Die Monomeren B umfassen aber auch die Anhydride entsprechender $\alpha,\beta$-monoethylenisch ungesättigter Dicarbonsäuren, wie beispielsweise Maleinsäureanhydrid oder 2-Methylmaleinsäureanhydrid. Bevorzugt ist das Monomere B ausgewählt aus der Gruppe umfassend Acrylsäure, Methacrylsäure, Crotonsäure, Fumarsäure, Maleinsäure, Maleinsäureanhydrid, 2-Methylmaleinsäure und Itaconsäure, wobei Acrylsäure, Methacrylsäure, Maleinsäure, Maleinsäureanhydrid und/oder Itaconsäure besonders bevorzugt sind. Selbstverständlich umfassen die Monomeren B auch die voll- oder teilneutralisierten wasserlöslichen Salze, insbesondere die Alkalimetall- oder Ammoniumsalze, der vorgenannten Säuren.

Das Polymerisat P enthält das wenigstens eine Monomere B in einer Menge von ≥ 0 und < 5 Gew.-% und bevorzugt ≥ 0,1 und ≤ 4 Gew.-% und insbesondere bevorzugt ≥ 0,1 und ≤ 3 Gew.-% in einpolymerisierter Form.

Als Monomere C können alle sich von den Monomeren A und B unterscheidenden ethylenisch ungesättigten Verbindungen eingesetzt werden, wobei die Monomeren C jedoch in Art und Menge so gewählt werden, dass ein allein aus diesen ethylenisch ungesättigten Verbindungen in einpolymerisierter Form aufgebautes Polymerisat eine Glasübergangstemperatur im Bereich ≥ 10 und ≤ 50 °C aufweisen würde.

Als Monomere C geeignet sind beispielsweise konjugierte aliphatische $C_4$- bis $C_9$-Dienverbindungen, Ester aus Vinylalkohol und einer $C_1$- bis $C_{10}$-Monocarbonsäure, $C_1$- bis $C_{10}$-Alkylacrylate, $C_5$- bis $C_{10}$-Alkylmethacrylate, $C_5$- bis $C_{10}$-Cycloalkylacrylate und -methacrylate, $C_1$- bis $C_{10}$-Dialkylmaleinate, $C_1$- bis $C_{10}$-Dialkylfumarate, Vinylether von $C_3$- bis $C_{10}$-Alkanolen, verzweigte und unverzweigte $C_3$- bis $C_{10}$-Olefine, wie insbesondere Vinylacetat, Ethylacrylat, n-Propylacrylat, n-Butylacrylat, iso-Butylacrylat, sec-Butylacrylat, n-Hexylacrylat, 2-Ethylhexylacrylat, n-Hexylmethacrylat, 2-Ethylhexylmethacrylat, Di-n-butylmaleinat, Di-n-butylfumarat oder tert.-Butylvinylether verwendet, wobei 2-Ethylhexylacrylat, n-Butylacrylat, 1,4-Butadien und/oder Ethylacrylat insbesondere bevorzugt sind.

Zu den Monomeren C gehören jedoch auch vinylaromatische Monomere, $C_1$- bis $C_4$-Alkylmethacrylate und ethylenisch ungesättigte Nitrilverbindungen. Unter vinylaromatischen Monomeren versteht man insbesondere Derivate des Styrols oder des $\alpha$-Methylstyrols, in denen die Phenylkerne gegebenenfalls durch 1, 2 oder 3 $C_1$- bis $C_4$-Alkylgruppen, Halogen, insbesondere Brom oder Chlor und/oder Methoxygruppen substituiert sind, wie beispielsweise Styrol, $\alpha$-Methylstyrol, o- oder p-Vinyltoluol, p-Acetoxystyrol, p-Bromstyrol, p-tert.-Butylstyrol, o-, m- oder p-Chlorstyrol. Bei den ethylenisch ungesättigten Nitrilverbindungen handelt es sich im Wesentlichen um $C_3$- bis $C_6$-, bevorzugt $C_3$- oder $C_4$-Monocarbonsäurenitrile oder $C_4$- bis $C_6$-Dicarbonsäurenitrile, wie beispielsweise Acrylnitril, Methacrylnitril, Maleinsäuredinitril und/oder Fumarsäuredinitril, wobei Acrylnitril und/oder Methacrylnitril besonders bevorzugt sind. Als $C_1$-bis $C_4$-Alkylmethacrylate seien beispielhaft Methylmethacrylat, tert.-Butylacrylat, tert.-Butylmethacrylat, Ethylmethacrylat oder Isobutylmethacrylat genannt.

Vorteilhaft sind die Monomeren C ausgewählt sind aus der Gruppe umfassend konjugierte aliphatische $C_4$- bis Cg-Diene, Ester aus Vinylalkohol und einer $C_1$- bis $C_{10}$-Monocarbonsäure, $C_1$- bis $C_{10}$-Alkylacrylate, $C_1$- bis $C_{10}$-Alkylmethacrylate, ethylenisch ungesättigte $C_3$- bis $C_6$-Monocarbonsäurenitrile, ethylenisch ungesättigte $C_4$- bis $C_6$-Dicarbonsäurenitrile, $C_5$- bis $C_{10}$-Cycloalkylacrylate und -methacrylate, $C_1$- bis $C_{10}$-Dialkylmaleinate und $C_1$- bis $C_{10}$-Dialkylfumarate und vinylaromatische Monomere.

Mit besonderem Vorteil sind die Monomeren C ausgewählt aus der Gruppe umfassend 2-Ethylhexylacrylat, n-Butylacrylat, Acrylnitril, 1,4-Butadien, Ethylacrylat, Vinylacetat, Methylmethacrylat, Styrol und tert.-Butylstyrol.

Von wesentlicher Bedeutung ist, dass die Monomeren C in Art und Menge so gewählt werden, dass ein allein aus diesen ethylenisch ungesättigten Monomeren in einpolymerisierter Form aufgebautes Polymerisat eine Glasübergangstemperatur im Bereich ≥ 10 und ≤ 50 °C und bevorzugt ≥ 25 und ≤ 40 °C aufweisen würde.

Mit der Glasübergangstemperatur Tg, ist im Rahmen dieser Schrift der Grenzwert der Glasübergangstemperatur gemeint, dem diese gemäß G. Kanig (Kolloid-Zeitschrift & Zeitschrift für Polymere, Bd. 190, Seite 1, Gleichung 1) mit zunehmendem Molekulargewicht zustrebt. Die Tg wird im Rahmen dieser Schrift nach dem DSC-Verfahren ermittelt (Differential Scanning Calorimetry, 20 K/min, midpoint-Messung, DIN 53 765). Die Tg-Werte für die Homopolymerisate der meisten Monomeren sind bekannt und z.B. in Ullmann's Ecyclopedia of Industrial Chemistry, VCH Weinheim, 1992, Bd.5, Vol. A21, S. 169 aufgeführt; weitere Quellen für Glasübergangstemperaturen von Homopolymerisaten bilden z.B. J. Brandrup, E.H. Immergut, Polymer Handbook, 1st Ed., J. Wiley, New York 1966, 2nd Ed. J.Wiley, New York 1975, und 3rd Ed. J. Wiley, New York 1989).

Wesentlich ist jedoch, dass die Glasübergangstemperaturen nicht oder lediglich schwach vernetzter Polymerisate nach Fox (T.G. Fox, Bull. Am. Phys. Soc. 1956 [Ser. II] 1, Seite 123 und gemäß Ullmann's Encyclopädie der technischen Chemie, Bd. 19, Seite 18,4. Auflage, Verlag Chemie, Weinheim, 1980) in guter Näherung nach folgender Gleichung abgeschätzt werden können:

$$1/Tg = x1/Tg1 + x2/Tg2 + .... xn/Tgn,$$

wobei x1, x2, .... xn die Massenbrüche der Monomeren 1, 2, .... n und Tg1, Tg2, .... Tgn die Glasübergangstemperaturen der jeweils nur aus einem der Monomeren 1, 2, .... n aufgebauten Polymerisaten in Grad Kelvin bedeuten.

Erfindungsgemäß enthält das Polymerisat P > 85 und ≤ 99,9 Gew.-%, bevorzugt ≥ 91 und ≤ 99,8 Gew.-% und insbesondere bevorzugt ≥ 94 und ≤ 99,4 Gew.-% Monomere C in einpolymerisierter Form.

Unter $C_1$- bis $C_{10}$-Alkylgruppen sollen im Rahmen dieser Schrift lineare oder verzweigte Alkylreste mit 1 bis 10-Kohlenstoffatomen, beispielsweise Methyl, Ethyl, n-Propyl, iso-Propyl, n-Butyl, sec-Butyl, iso-Butyl, tert.-Butyl, n-Pentyl, iso-Pentyl, tert.-Pentyl n-Hexyl, 2-Ethylhexyl, n-Nonyl oder n-Decyl verstanden werden. Unter $C_5$- bis $C_{10}$-Cycloalkylgruppen sind vorzugsweise Cyclopentyl- oder Cyclohexylgruppen zu verstehen, welche gegebenenfalls durch 1, 2 oder 3 $C_1$-bis $C_4$-Alkylgruppen substituiert sein können.

Vorteilhaft wird ein Polymerisat P eingesetzt, welches

| | |
|---|---|
| ≥ 0,1 und ≤ 5 Gew.-% | Monomere A |
| ≥ 0,1 und ≤ 4 Gew.-% | Monomere B, und |
| ≥ 91 und ≤ 99,8 Gew.-% | Monomere C |

sowie insbesondere vorteilhaft

| | |
|---|---|
| ≥ 0,5 und ≤ 3 Gew.-% | Monomere A |
| ≥ 0,1 und ≤ 3 Gew.-% | Monomere B, und |
| ≥ 94 und ≤ 99,4 Gew.-% | Monomere C, |

in einpolymerisierter Form enthält.

Mit besonderem Vorteil ist das Polymerisat P in einpolymerisierter Form aufgebaut aus

| | |
|---|---|
| ≥ 0,5 und ≤ 3 Gew.-% | N-Methylolacrylamid, N-Methylolmethacrylamid, Glycidylacrylat, Glycidylmethacrylat, 2-Hydroxyethylacrylat, 2-Hydroxyethylmethacrylat, 1,4-Butylenglykoldiacrylat, Allylmethacrylat und/oder Divinylbenzol |
| ≥ 0,1 und ≤ 3 Gew.-% | Acrylsäure, Methacrylsäure, Maleinsäure, Maleinsäureanhydrid und/oder Itaconsäure |
| ≥ 94 und ≤ 99,4 Gew.-% | 2-Ethylhexylacrylat, n-Butylacrylat, Acrylnitril, 1,4-Butadien, Ethylacrylat, Vinylacetat, Methylmethacrylat, Styrol und/oder tert.-Butylmethacrylat. |

Von Bedeutung ist, dass im Rahmen dieser Schrift der Anteil der im Polymeren P in einpolymeriserter Form vorliegenden Monomeren A bis C, den zur Herstellung des Polymerisats P eingesetzten Mengenanteilen der Monomeren A bis C entsprechen soll.

Die erfindungsgemäßen Polymerisate P können prinzipiell Glasübergangstemperaturen Tg im Bereich von ≥ 10 und ≤ 100 °C sowie vorteilhaft ≥ 15 und ≤ 70 °C und insbesondere vorteilhaft ≥ 25 und ≤ 50 °C aufweisen.

Die Herstellung der Polymerisate P ist dem Fachmann prinzipiell geläufig und erfolgt beispielsweise durch radikalische Polymerisation der Monomere A bis C nach der Methode der Substanz-, Emulsions-, Lösungs-, Fällungs- oder Suspensionspolymerisation, wobei jedoch die radikalisch initiierte wässrige Emulsionspolymerisation insbesondere bevorzugt ist. Erfindungsgemäß vorteilhaft wird das Polymerisat P daher in einem wässrigen Medium dispergiert, d.h. in Form einer wässrigen Polymerisatdispersion eingesetzt.

Die Durchführung von radikalisch initiierten Emulsionspolymerisationen von ethylenisch ungesättigten Monomeren in einem wässrigen Medium ist vielfach vorbeschrieben und dem Fachmann daher hinreichend bekannt [vgl. hierzu Emulsionspolymerisation in Encyclopedia of Polymer Science and Engineering, Vol. 8, Seiten 659 ff. (1987); D.C. Blackley, in High Polymer Latices, Vol. 1, Seiten 35 ff. (1966); H. Warson, The Applications of Synthetic Resin Emulsions, Kapitel 5, Seiten 246 ff. (1972); D. Diederich, Chemie in unserer Zeit 24, Seiten 135 bis 142 (1990); Emulsion Polymerisation, Interscience Publishers, New York (1965); DE-A 40 03 422 und Dispersionen synthetischer Hochpolymerer, F. Hölscher, Springer-Verlag, Berlin (1969)]. Die radikalisch initiierte wässrige Emulsionspolymerisation erfolgt üblicherweise dergestalt, dass man die ethylenisch ungesättigten Monomeren, in der Regel unter Mitverwendung von Dispergierhilfsmitteln, wie Emulgatoren und/oder Schutzkolloiden, in wässrigem Medium dispers verteilt und mittels wenigstens eines wasserlöslichen radikalischen Polymerisationsinitiators polymerisiert. Häufig werden bei den erhaltenen wässrigen

Polymerisatdispersionen die Restgehalte an nicht umgesetzten ethylenisch ungesättigten Monomeren durch dem Fachmann ebenfalls bekannte chemische und/oder physikalische Methoden [siehe beispielsweise EP-A 771328, DE-A 19624299, DE-A 19621027, DE-A 19741184, DE-A 19741187, DE-A 19805122, DE-A 19828183, DE-A 19839199, DE-A 19840586 und 19847115] herabgesetzt, der Polymerisatfeststoffgehalt durch Verdünnung oder Aufkonzentration auf einen gewünschten Wert eingestellt oder der wässrigen Polymerisatdispersion weitere übliche Zusatzstoffe, wie beispielsweise bakterizide, schaum- oder viskositätsmodifizierende Additive zugesetzt. Von dieser allgemeinen Verfahrensweise unterscheidet sich die Herstellung einer wässrigen Dispersion des Polymerisats P lediglich durch die spezifische Verwendung der vorgenannten Monomeren A bis C. Dabei ist es selbstverständlich, dass zur Herstellung des Polymerisats P im Rahmen der vorliegenden Schrift auch die dem Fachmann geläufigen Saat-, Stufen- und Gradientenfahrweisen mit umfasst sein sollen.

Zur Herstellung der erfindungsgemäß eingesetzten Polymerisate P in Form ihrer wässrigen Polymerisatdispersion (wässrige Polymerisat P-Dispersion) kann die Gesamtmenge der Monomeren A bis C (Gesamtmonomerenmenge) im wässrigen Reaktionsmedium vor Initiierung der Polymerisationsreaktion vorgelegt werden. Es ist aber auch möglich, gegebenenfalls lediglich eine Teilmenge der Monomeren A bis C im wässrigen Reaktionsmedium vor Initiierung der Polymerisationsreaktion vorzulegen und dann nach Initiierung der Polymerisation unter Polymerisationsbedingungen während der radikalischen Emulsionspolymerisation die Gesamtmenge bzw. die gegebenenfalls verbliebene Restmenge nach Maßgabe des Verbrauchs kontinuierlich mit gleichbleibenden oder sich ändernden Mengenströmen oder diskontinuierlich zuzugeben. Dabei kann die Dosierung der Monomeren A bis C als separate Einzelströme, als inhomogene oder homogene (Teil)gemische oder als Monomerenemulsion erfolgen. Mit Vorteil werden die Monomeren A bis C in Form eines Monomerengemisches, insbesondere in Form einer wässrigen Monomerenemulsion dosiert.

Zur Herstellung der erfindungsgemäß eingesetzten wässrigen Polymerisate P-Dispersion werden Dispergierhilfsmittel mitverwendet, die sowohl die Monomerentröpfchen, wie auch die gebildeten Polymerisatteilchen im wässrigen Medium dispers verteilt halten und so die Stabilität der erzeugten wässrigen Polymerisatdispersion gewährleisten. Als Dispergierhilfsmittel kommen sowohl die zur Durchführung von radikalischen wässrigen Emulsionspolymerisationen üblicherweise eingesetzten Schutzkolloide als auch Emulgatoren in Betracht.

Geeignete Schutzkolloide sind beispielsweise Polyvinylalkohole, Polyalkylenglykole, Alkalimetallsalze von Polyacrylsäuren und Polymethacrylsäuren, Gelatinederivate oder Acrylsäure, Methacrylsäure, Maleinsäureanhydrid, 2-Acrylamido-2-methylpropansulfonsäure und/oder 4-Styrolsulfonsäure enthaltende Copolymerisate und deren Alkalimetallsalze aber auch N-Vinylpyrrolidon, N-Vinylcaprolactam, N-Vinylcarbazol, 1-Vinylimidazol, 2-Vinylimidazol, 2-Vinylpyridin, 4-Vinylpyridin, Acrylamid, Methacrylamid, amingruppentragende Acrylate, Methacrylate, Acrylamide und/oder Methacrylamide enthaltende Homo- und Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart, 1961, Seiten 411 bis 420.

Selbstverständlich können auch Gemische aus Schutzkolloiden und/oder Emulgatoren eingesetzt werden. Häufig werden als Dispergiermittel ausschließlich Emulgatoren eingesetzt, deren relative Molekulargewichte im Unterschied zu den Schutzkolloiden üblicherweise unter 1000 liegen. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im allgemeinen sind anionische Emulgatoren untereinander und mit nichtionischen Emulgatoren verträglich. Desgleichen gilt auch für kationische Emulgatoren, während anionische und kationische Emulgatoren meistens nicht miteinander verträglich sind. Eine Übersicht geeigneter Emulgatoren findet sich in Houben-Weyl, Methoden der organischen Chemie, Band XIV/1, Makromolekulare Stoffe, Georg-Thieme-Verlag, Stuttgart, 1961, Seiten 192 bis 208.

Als Dispergierhilfsmittel werden jedoch insbesondere Emulgatoren eingesetzt.

Gebräuchliche nichtionische Emulgatoren sind z.B. ethoxylierte Mono-, Di- und Tri-Alkylphenole (EO-Grad: 3 bis 50, Alkylrest: $C_4$ bis $C_{12}$) sowie ethoxylierte Fettalkohole (EO-Grad: 3 bis 80; Alkylrest: $C_8$ bis $C_{36}$). Beispiele hierfür sind die Lutensol® A-Marken ($C_{12}C_{14}$-Fettalkoholethoxylate, EO-Grad: 3 bis 8), Lutensol® AO-Marken ($C_{13}C_{15}$-Oxoalkoholethoxylate, EO-Grad: 3 bis 30), Lutensol® AT-Marken ($C_{16}C_{18}$-Fettalkoholethoxylate, EO-Grad: 11 bis 80), Lutensol® ON-Marken ($C_{10}$-Oxoalkoholethoxylate, EO-Grad: 3 bis 11) und die Lutensol® TO-Marken ($C_{13}$-Oxoalkoholethoxylate, EO-Grad: 3 bis 20) der Fa. BASF SE.

Übliche anionische Emulgatoren sind z.B. Alkalimetall- und Ammoniumsalze von Alkylsulfaten (Alkylrest: $C_8$ bis $C_{12}$), von Schwefelsäurehalbestern ethoxylierter Alkanole (EO-Grad: 4 bis 30, Alkylrest: $C_{12}$ bis $C_{18}$) und ethoxylierter Alkylphenole (EO-Grad: 3 bis 50, Alkylrest: $C_4$ bis $C_{12}$), von Alkylsulfonsäuren (Alkylrest: $C_{12}$ bis $C_{18}$) und von Alkylarylsulfonsäuren (Alkylrest: $C_9$ bis $C_{18}$).

Als weitere anionische Emulgatoren haben sich ferner Verbindungen der allgemeinen Formel (I)

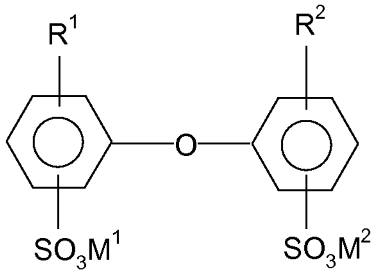

(I) ,

worin $R^1$ und $R^2$ H-Atome oder $C_4$- bis $C_{24}$-Alkyl bedeuten und nicht gleichzeitig H-Atome sind, und $M^1$ und $M^2$ Alkalimetallionen und/oder Ammoniumionen sein können, als geeignet erwiesen. In der allgemeinen Formel (I) bedeuten $R^1$ und $R^2$ bevorzugt lineare oder verzweigte Alkylreste mit 6 bis 18 C-Atomen, insbesondere mit 6, 12 und 16 C-Atomen oder Wasserstoff, wobei $R^1$ und $R^2$ nicht beide gleichzeitig H-Atome sind. $M^1$ und $M^2$ sind bevorzugt Natrium, Kalium oder Ammonium, wobei Natrium besonders bevorzugt ist. Besonders vorteilhaft sind Verbindungen (I), in denen $M^1$ und $M^2$ Natrium, $R^1$ ein verzweigter Alkylrest mit 12 C-Atomen und $R^2$ ein H-Atom oder $R^1$ ist. Häufig werden technische Gemische verwendet, die einen Anteil von 50 bis 90 Gew.-% des monoalkylierten Produktes aufweisen, wie beispielsweise Dowfax® 2A1 (Marke der Dow Chemical Company). Die Verbindungen (I) sind allgemein bekannt, z.B. aus US-A 4269749, und im Handel erhältlich.

Geeignete kationenaktive Emulgatoren sind in der Regel einen $C_6$- bis $C_{18}$-Alkyl-, -Alkylaryl- oder heterocyclischen Rest aufweisende primäre, sekundäre, tertiäre oder quartäre Ammoniumsalze, Alkanolammoniumsalze, Pyridiniumsalze, Imidazoliniumsalze, Oxazoliniumsalze, Morpholiniumsalze, Thiazoliniumsalze sowie Salze von Aminoxiden, Chinoliniumsalze, Isochinoliniumsalze, Tropyliumsalze, Sulfoniumsalze und Phosphoniumsalze. Beispielhaft genannt seien Dodecylammoniumacetat oder das entsprechende Sulfat, die Sulfate oder Acetate der verschiedenen 2-(N,N,N-Trimethylammonium)ethylparaffinsäureester, N-Cetylpyridiniumsulfat, N-Laurylpyridiniumsulfat sowie N-Cetyl-N,N,N-trimethylammoniumsulfat, N-Dodecyl-N,N,N-trimethylammoniumsulfat, N-Octyl-N,N,N-trimethlyammoniumsulfat, N,N-Distearyl-N,N-dimethylammoniumsulfat sowie das Gemini-Tensid N,N'-(Lauryldimethyl)ethylendiamindisulfat, ethoxyliertes Talgfettalkyl-N-methylammoniumsulfat und ethoxyliertes Oleylamin (beispielsweise Uniperol® AC der Fa. BASF SE, ca. 11 Ethylenoxideinheiten). Zahlreiche weitere Beispiele finden sich in H. Stache, Tensid-Taschenbuch, Carl-Hanser-Verlag, München, Wien, 1981 und in McCutcheon's, Emulsifiers & Detergents, MC Publishing Company, Glen Rock, 1989. Günstig ist, wenn die anionischen Gegengruppen möglichst gering nucleophil sind, wie beispielsweise Perchlorat, Sulfat, Phosphat, Nitrat und Carboxylate, wie beispielsweise Acetat, Trifluoracetat, Trichloracetat, Propionat, Oxalat, Citrat, Benzoat, sowie konjugierte Anionen von Organosulfonsäuren, wie zum Beispiel Methylsulfonat, Trifluormethylsulfonat und para-Toluolsulfonat, weiterhin Tetrafluoroborat, Tetraphenylborat, Tetrakis(pentafluorophenyl)borat, Tetrakis[bis(3,5-trifluormethyl)phenyl]borat, Hexafluorophosphat, Hexafluoroarsenat oder Hexafluoroantimonat.

Die als Dispergierhilfsmittel bevorzugt eingesetzten Emulgatoren werden vorteilhaft in einer Gesamtmenge $\geq$ 0,005 und $\leq$ 10 Gew.-%, vorzugsweise $\geq$ 0,01 und $\leq$ 5 Gew.-%, insbesondere $\geq$ 0,1 und $\leq$ 3 Gew.-%, jeweils bezogen auf die Gesamtmonomerenmenge, eingesetzt.

Die Gesamtmenge der als Dispergierhilfsmittel zusätzlich oder statt der Emulgatoren eingesetzten Schutzkolloide beträgt oft $\geq$ 0,1 und $\leq$ 40 Gew.-% und häufig $\geq$ 0,2 und $\leq$ 25 Gew.-%, jeweils bezogen die Gesamtmonomerenmenge.

Bevorzugt werden jedoch anionische und/oder nichtionische Emulgatoren und insbesondere bevorzugt anionische Emulgatoren als Dispergierhilfsmittel eingesetzt.

Zur Herstellung der erfindungsgemäß eingesetzten Polymerisate P-Dispersion kann die Gesamtmenge des Dispergierhilfsmittels im wässrigen Reaktionsmedium vor Initiierung der Polymerisationsreaktion vorgelegt werden. Es ist aber auch möglich, gegebenenfalls lediglich eine Teilmenge des Dispergierhilfsmittels im wässrigen Reaktionsmedium vor Initiierung der Polymerisationsreaktion vorzulegen und dann unter Polymerisationsbedingungen während der radikalischen Emulsionspolymerisation die Gesamtmenge bzw. die gegebenenfalls verbliebene Restmenge des Dispergierhilfsmittels kontinuierlich oder diskontinuierlich zuzugeben. Bevorzugt erfolgt die Zugabe der Haupt- oder der Gesamtmenge Dispergierhilfsmittel in Form einer wässrigen Monomerenemulsion.

Die Auslösung der radikalisch initiierten wässrigen Emulsionspolymerisation erfolgt mittels eines radikalischen Polymerisationsinitiators (Radikalinitiator). Es kann sich dabei prinzipiell sowohl um Peroxide als auch um Azoverbindungen handeln. Selbstverständlich kommen auch Redoxinitiatorsysteme in Betracht. Als Peroxide können prinzipiell anorganische Peroxide, wie Wasserstoffperoxid oder Peroxodisulfate, wie die Mono- oder Di-Alkalimetall- oder Ammoniumsalze der Peroxodischwefelsäure, wie beispielsweise deren Mono- und Di-Natrium-, -Kalium- oder Ammoniumsalze oder organische Peroxide, wie Alkylhydroperoxide, beispielsweise tert.-Butyl-, p-Mentyl- oder Cumylhydroperoxid, sowie Dialkyl- oder Diarylperoxide, wie Di-tert.-Butyl- oder Di-Cumylperoxid eingesetzt werden. Als Azoverbindung finden im Wesentlichen 2,2'-Azobis(isobutyronitril), 2,2'-Azobis(2,4-dimethylvaleronitril) und 2,2'-Azobis(amidinopropyl)dihydrochlorid (AIBA, entspricht V-50 von Wako Chemicals) Verwendung. Als Oxidationsmittel für Redoxinitiatorsysteme kommen im Wesentlichen die oben genannten Peroxide in Betracht. Als entsprechende Reduktionsmittel können Schwefelverbindungen mit niedriger Oxidationsstufe, wie Alkalisulfite, beispielsweise Kalium- und/oder Natriumsulfit, Alkalihydrogensulfite, beispielsweise Kalium- und/oder Natriumhydrogensulfit, Alkalimetabisulfite, beispielsweise Kalium- und/oder Natriummetabisulfit, Formaldehydsulfoxylate, beispielsweise Kalium- und/oder Natriumformaldehydsulfoxylat, Alkalisalze, speziell Kalium- und/oder Natriumsalze aliphatische Sulfinsäuren und Alkalimetallhydrogensulfide, wie beispielsweise Kalium- und/oder Natriumhydrogensulfid, Salze mehrwertiger Metalle, wie Eisen-(II)-sulfat, Eisen-(II)-Ammoniumsulfat, Eisen-(II)-phosphat, Endiole, wie Dihydroxymaleinsäure, Benzoin und/oder Ascorbinsäure sowie reduzierende Saccharide, wie Sorbose, Glucose, Fructose und/oder Dihydroxyaceton eingesetzt werden. In der Regel beträgt die Menge des eingesetzten Radikalinitiators, bezogen auf die Gesamtmonomerenmenge, 0,01 bis 5 Gew.-%, bevorzugt 0,1 bis 3 Gew.-% und insbesondere bevorzugt 0,2 bis 1,5 Gew.-%.

Zur Herstellung der erfindungsgemäß eingesetzten Polymerisate P-Dispersion kann die Gesamtmenge des Radikalinitiators im wässrigen Reaktionsmedium vor Initiierung der Polymerisationsreaktion vorgelegt werden. Es ist aber auch möglich, gegebenenfalls lediglich eine Teilmenge des Radikalinitiators im wässrigen Reaktionsmedium vor Initiierung der Polymerisationsreaktion vorzulegen und dann unter Polymerisationsbedingungen während der radikalischen Emulsionspolymerisation die Gesamtmenge bzw. die gegebenenfalls verbliebene Restmenge nach Maßgabe des Verbrauchs kontinuierlich oder diskontinuierlich zuzugeben.

Unter Initiierung der Polymerisationsreaktion wird der Start der Polymerisationsreaktion der im Polymerisationsgefäß vorliegenden Monomeren nach Radikalbildung des Radikalinitiators verstanden. Dabei kann die Initiierung der Polymerisationsreaktion durch Zugabe von Radikalinitiator zum wässrigen Polymerisationsgemisch im Polymerisationsgefäß unter Polymerisationsbedingungen erfolgen. Es ist aber auch möglich, dass eine Teil- oder die Gesamtmenge des Radikalinitiators dem die vorgelegten Monomeren enthaltenden wässrigen Polymerisationsgemisch im Polymerisationsgefäß unter Bedingungen, welche nicht geeignet sind eine Polymerisationsreaktion auszulösen, beispielsweise bei tiefer Temperatur, zugegeben werden und danach im wässrigen Polymerisationsgemisch Polymerisationsbedingungen eingestellt werden. Unter Polymerisationsbedingungen sind dabei generell diejenigen Temperaturen und Drücke zu verstehen, unter denen die radikalisch initiierte wässrige Emulsionspolymerisation mit ausreichender Polymerisationsgeschwindigkeit verläuft. Sie sind insbesondere abhängig vom verwendeten Radikalinitiator. Vorteilhaft werden Art und Menge des Radikalinitiators, die Polymerisationstemperatur und der Polymerisationsdruck so ausgewählt, dass der Radikalinitiator eine Halbwertszeit < 3 Stunden, insbesondere vorteilhaft < 1 Stunde und ganz besonders vorteilhaft < 30 Minuten aufweist und dabei immer genügend Startradikale zur Verfügung stehen, um die Polymerisationsreaktion zu initiieren und aufrechtzuerhalten.

Als Reaktionstemperatur für die radikalische wässrige Emulsionspolymerisation kommt der gesamte Bereich von 0 bis 170 °C in Betracht. Dabei werden in der Regel Temperaturen von 50 bis 120 °C, bevorzugt 60 bis 110 °C und insbesondere bevorzugt 70 bis 100 °C angewendet. Die radikalische wässrige Emulsionspolymerisation kann bei einem Druck kleiner, gleich oder größer 1 atm [1,013 bar (absolut), Atmosphärendruck] durchgeführt werden, so dass die Polymerisationstemperatur 100 °C übersteigen und bis zu 170 °C betragen kann. Bei Anwesenheit von Monomeren A bis F mit einem niedrigen Siedepunkt wird die Emulsionspolymerisation vorzugsweise unter erhöhtem Druck durchgeführt. Dabei kann der Druck 1,2, 1,5, 2, 5, 10, 15 bar (absolut) oder noch höhere Werte einnehmen. Wird die Emulsionspolymerisation im Unterdruck durchgeführt, werden Drücke von 950 mbar, häufig von 900 mbar und oft 850 mbar (absolut) eingestellt. Vorteilhaft wird die radikalische wässrige Emuslionspolymerisation bei 1 atm unter Sauerstoffausschluss, insbesondere unter Inertgasatmosphäre, wie beispielsweise unter Stickstoff oder Argon durchgeführt.

Das wässrige Reaktionsmedium kann prinzipiell auch in untergeordneten Mengen (< 5 Gew.-%) wasserlösliche organische Lösungsmittel, wie beispielsweise Methanol, Ethanol, Isopropanol, Butanole, Pentanole, aber auch Aceton etc. umfassen. Bevorzugt wird das erfindungsgemäße Verfahren jedoch in Abwesenheit solcher Lösungsmittel durchgeführt.

Neben den vorgenannten Komponenten können während der Emulsionspolymerisation optional auch radikalkettenübertragende Verbindungen eingesetzt werden, um das Molekulargewicht der durch die Polymerisation zugänglichen Polymerisate P zu reduzieren bzw. zu kontrollieren. Dabei kommen im Wesentlichen aliphatische und/oder araliphatische Halogenverbindungen, wie beispielsweise n-Butylchlorid, n-Butylbromid, n-Butyljodid, Methylenchlorid, Ethylendichlorid, Chloroform, Bromoform, Bromtrichlormethan, Dibromdichlormethan, Tetrachlorkohlenstoff, Tetrabromkohlenstoff, Benzylchlorid, Benzylbromid, organische Thioverbindungen, wie primäre, sekundäre oder tertiäre aliphatische Thiole, wie beispielsweise Ethanthiol, n-Propanthiol, 2-Propanthiol, n-Butanthiol, 2-Butanthiol, 2-Methyl-2-propanthiol, n-Pentanthiol, 2-Pentanthiol, 3-Pentanthiol, 2-Methyl-2-butanthiol, 3-Methyl-2-butanthiol, n-Hexanthiol, 2-Hexanthiol, 3-Hexanthiol, 2-Methyl-2-pentanthiol, 3-Methyl-2-pentanthiol, 4-Methyl-2-pentanthiol, 2-Methyl-3-pentanthiol, 3-Methyl-3-pentanthiol, 2-Ethylbutanthiol, 2-Ethyl-2-butanthiol, n-Heptanthiol und seine isomeren Verbindungen, n-Octanthiol und seine isomeren Verbindungen, n-Nonanthiol und seine isomeren Verbindungen, n-Decanthiol und seine isomeren Verbindungen, n-Undecanthiol und seine isomeren Verbindungen, n-Dodecanthiol und seine isomeren Verbindungen, n-Tridecanthiol und seine isomeren Verbindungen, substituierte Thiole, wie beispielsweise 2-Hydroxyethanthiol, aromatische Thiole, wie Benzolthiol, ortho-, meta-, oder para-Methylbenzolthiol, sowie alle weiteren im Polymerhandbook 3rd edtition, 1989, J. Brandrup und E.H. Immergut, John Wiley & Sons, Abschnitt II, Seiten 133 bis 141, beschriebenen Schwefelverbindungen, aber auch aliphatische und/oder aromatische Aldehyde, wie Acetaldeyhd, Propionaldehyd und/oder Benzaldehyd, ungesättigte Fettsäuren, wie Ölsäure, Diene mit nicht konjugierten Doppelbindungen, wie Divinylmethan oder Vinylcyclohexan oder Kohlenwasserstoffe mit leicht abstrahierbaren Wasserstoffatomen, wie beispielsweise Toluol, zum Einsatz. Es ist aber auch möglich, Gemische sich nicht störender vorgenannter radikalkettenübertragender Verbindungen einzusetzen.

Die während der Emulsionspolymerisation optional eingesetzte Gesamtmenge der radikalkettenübertragenden Verbindungen, bezogen auf die Gesamtmonomerenmenge, ist in der Regel ≤ 5 Gew.-%, oft ≤ 3 Gew.-% und häufig ≤ 1 Gew.-%.

Günstig ist es, wenn eine Teil- oder die Gesamtmenge der optional eingesetzten radikalkettenübertragenden Verbindung dem wässrigen Reaktionsmedium vor der Initiierung der radikalischen Polymerisation zugeführt wird. Darüber hinaus kann eine Teil- oder die Gesamtmenge der radikalkettenübertragenden Verbindung dem wässrigen Reaktionsmedium vorteilhaft auch gemeinsam mit den Monomeren A bis F während der Polymerisation zugeführt werden.

Wesentlich ist, dass die radikalisch initiierte wässrige Emulsionspolymerisation auch in Anwesenheit einer Polymersaat, beispielsweise in Anwesenheit von 0,01 bis 3 Gew.-%, häufig von 0,02 bis 2 Gew.-% und oft von 0,04 bis 1,5 Gew.-% einer Polymersaat, jeweils bezogen auf die Gesamtmonomerenmenge, durchgeführt werden kann.

Eine Polymersaat wird insbesondere dann eingesetzt, wenn die Teilchengröße der mittels einer radikalisch wässrigen Emulsionspolymerisation herzustellenden Polymerpartikel gezielt eingestellt werden soll (siehe hierzu beispielsweise US-A 2520959 und US-A 3397165).

Insbesondere wird eine Polymersaat eingesetzt, deren Polymersaatpartikel eine enge Teilchengrößenverteilung und gewichtsmittlere Durchmesser Dw ≤ 100 nm, häufig ≥ 5 nm bis ≤ 50 nm und oft ≥ 15 nm bis ≤ 35 nm aufweisen. Die Bestimmung der gewichtsmittleren Teilchendurchmesser ist dem Fachmann bekannt und erfolgt beispielsweise über die Methode der Analytischen Ultrazentrifuge. Unter gewichtsmittlerem Teilchendurchmesser wird in dieser Schrift der nach der Methode der Analytischen Ultrazentrifuge ermittelte gewichtsmittlere Dw50-Wert verstanden (vgl. hierzu S.E. Harding et al., Analytical Ultracentrifugation in Biochemistry and Polymer Science, Royal Society of Chemistry, Cambridge, Great Britain 1992, Chapter 10, Analysis of Polymer Dispersions with an Eight-Cell-AUC-Multiplexer: High Resolution Particle Size Distribution and Density Gradient Techniques, W. Mächtle, Seiten 147 bis 175).

Unter enger Teilchengrößenverteilung soll im Rahmen dieser Schrift verstanden werden, wenn das Verhältnis der nach der Methode der Analytischen Ultrazentrifuge ermittelten gewichtsmittleren Teilchendurchmesser Dw50 und zahlenmittleren Teilchendurchmesser DN50 [Dw50/DN50] < 2,0, bevorzugt < 1,5 und insbesondere bevorzugt < 1,2 oder < 1,1 ist.

Üblicherweise wird die Polymersaat in Form einer wässrigen Polymerisatdispersion eingesetzt. Die vorgenannten Mengenangaben beziehen sich dabei auf den Polymerisatfeststoffanteil der wässrigen Polymersaatdispersion.

Wird eine Polymersaat verwendet, so wird vorteilhaft eine Fremdpolymersaat eingesetzt. Im Unterschied zu einer sogenannten in situ-Polymersaat, welche vor Beginn der eigentlichen Emulsionspolymerisation im Reaktionsgefäß hergestellt wird und welche in der Regel die gleiche monomere Zusammensetzung aufweist wie das durch die nachfolgende radikalisch initiierte wässrige Emulsionspolymerisation hergestellte Polymerisat, wird unter einer Fremdpolymersaat eine Polymersaat verstanden, die in einem separaten Reaktionsschritt hergestellt wurde und deren monomere Zusammensetzung von dem durch die radikalisch initiierte wässrige Emulsionspolymerisation hergestellten Polymerisat verschieden ist, was jedoch nichts anderes bedeutet, als dass zur Herstellung der Fremdpolymersaat und zur Herstellung der wässrigen Polymerisatdispersion unterschiedliche Monomere bzw. Monomerenmischungen mit unterschiedlicher Zusammensetzung eingesetzt werden. Die Herstellung einer Fremdpolymersaat ist dem Fachmann geläufig und erfolgt üblicherweise dergestalt, dass eine relativ kleine Menge an Monomeren sowie eine relativ große Menge an Emulgatoren in einem Reaktionsgefäß vorgelegt und bei Reaktionstemperatur eine ausreichende Menge an Polymerisationsinitiator zugegeben wird.

Erfindungsgemäß bevorzugt wird eine Polymerfremdsaat mit einer Glasübergangstemperatur ≥ 50 °C, häufig ≥ 60 °C oder ≥ 70 °C und oft ≥ 80 °C oder ≥ 90 °C eingesetzt. Insbesondere bevorzugt ist eine Polystyrol- oder eine Polymethylmethacrylatpolymersaat.

Die Gesamtmenge an Fremdpolymersaat kann im Polymerisationsgefäß vorgelegt werden. Es ist aber auch möglich, lediglich eine Teilmenge der Fremdpolymersaat im Polymerisationsgefäß vorzulegen und die verbleibende Restmenge während der Polymerisation gemeinsam mit den Monomeren A bis C zuzugeben. Falls erforderlich, kann aber auch die Gesamtpolymersaatmenge im Verlauf der Polymerisation zuzugeben werden. Vorzugsweise wird die Gesamtmenge an Fremdpolymersaat vor Initiierung der Polymerisationsreaktion im Polymerisationsgefäß vorgelegt.

Die durch Emulsionspolymerisation zugänglichen wässrigen Polymerisat P-Dispersionen weisen üblicherweise einen Polymerisatfeststoffgehalt von ≥ 10 und ≤ 70 Gew.-%, häufig ≥ 20 und ≤ 65 Gew.-% und oft ≥ 25 und ≤ 60 Gew.-%, jeweils bezogen auf die wässrige Polymerisatdispersion, auf. Der über quasielastische Lichtstreuung (ISO-Norm 13 321) ermittelte zahlenmittlere Teilchendurchmesser (cumulant z-average) liegt in der Regel im Bereich ≥ 10 und ≤ 2000

nm, häufig im Bereich ≥ 10 und ≤ 700 nm und oft im Bereich ≥ 50 bis ≤ 250 nm.

Selbstverständlich lassen sich wässrige Polymerisat P-Dispersionen prinzipiell auch in Form sogenannter sekundärer Polymerisatdispersionen herstellen (zur prinzipiellen Herstellung von sekundären Polymerisatdispersionensiehe beispielsweise Eckersley et al., Am. Chem. Soc., Div. Polymer Chemistry, 1977, 38(2), Seiten 630, 631, US-A 3360599, US-A 3238173, US-A 3726824, US-A 3734686 oder US-A 6207756). Die Herstellung der sekundären wässrigen Polymerisat P-Dispersionen erfolgt dabei in der Regel dergestalt, dass die nach der Methode der Substanz- oder Lösungspolymerisation hergestellten Polymerisate P in einem geeigneten organischen Lösemittel aufgelöst und unter Ausbildung von wässrigen Polymeren/Lösemittel-(Mini)emulsionen in ein wässriges Medium dispergiert werden. Anschließende Lösemittelabtrennung liefert die entsprechenden wässrigen Polymerisat P-Dispersionen.

Dementsprechend enthalten die erfindungsgemäßen wässrigen Bindemittelzusammensetzungen wässrige Dispersionen von Polymerisaten P, deren zahlenmittlerer Teilchendurchmesser im Bereich ≥ 10 und ≤ 2000 nm, vorteilhaft im Bereich ≥ 10 und ≤ 700 nm und besonders vorteilhaft im Bereich ≥ 50 bis ≤ 250 nm liegen.

Essentieller Bestandteil der wässrigen Bindemittelzusammensetzung ist neben dem wenigstens einen Polymerisat P noch wenigstens eine Ligninverbindung L.

Unter Ligninen versteht der Fachmann eine Gruppe von phenolischen Makromolekülen, welche aus verschiedenen Monomerbausteinen, wie insbesondere p-Cumarylalkohol, Coniferylalkohol und Sinapylalkohol, welche im Wesentlichen über Ethergruppen miteinander verbunden sind, aufgebaut sind. Bei den Ligninen handelt es sich um feste Biopolymere, welche in die Zellwände von Pflanzen eingelagert werden und dadurch die Verholzung einer Zelle, die sogenannte Lignifizierung, bewirken. Da Lignin in der Natur über eine enzymatische Radikalreaktion erfolgt, sind die Zusammensetzung und die Anteile der einzelnen Bausteine stark variabel und eine gerichtete Verknüpfung nach einem immer gleichen Schema existiert nicht. Von Bedeutung ist ferner, dass sich das Lignin verschiedener Holz bzw. Pflanzenarten durch die prozentualen Anteile der vorgenannten Hauptkomponenten unterscheidet. So enthält das Lignin aus Nadelholz überwiegend Coniferyleinheiten, welche einen Guajacylrest (3-Methoxy-4-hydroxyphenylrest) aufweisen. Dagegen enthält das Lignin aus Laubholz wechselnde Anteile von Guajacylresten und Sinapyleinheiten, welche einen Syringylrest (3,5-Methoxy-4-hydroxyphenylrest) enthalten. Bei der Papier- und Zellstoffherstellung muss das störende Lignin aus der Lignocellulose gelöst und aus dem Prozess der Papier- und Zellstoffherstellung entfernt werden. Der Abbau und das Abtrennen des Lignins aus der Lignocellulose erfolgt im Wesentlichen durch zwei Verfahren, nämlich dem Sulfatverfahren, auch Kraft-Prozess genannt und dem Sulfitverfahren. Dabei erfolgt der Abbau und das Abtrennen des Lignins nach dem Sulfatverfahren bei erhöhter Temperatur (ca. 170 °C) durch Umsetzung der Lignocellulose (im Holz oder anderen cellulosehaltigen Pflanzen) mit Alkalimetallsulfiden in stark alkalischem Medium, wobei insbesondere Natriumsulfid und Natronlauge eingesetzt werden. Nach Abtrennung der Cellulose weist die Ablauge aus dem Sulfatverfahren in ihrer Festsubstanz bei Verwendung von Nadelhölzern ca. 45 Gew.-% und bei Verwendung von Laubhölzern ca. 38 Gew.-% an sogenanntem Kraft-Lignin auf. Beim Sulfitverfahren erfolgt der Abbau und das Abtrennen des Lignins durch Umsetzung der Lignocellulose mit schwefliger Säure und anschließender Neutralisation mit einer Base, wobei als chemisch nicht exakt definiertes Umsetzungsprodukt, sogenannte Ligninsulfonate gebildet werden. Nach Abtrennung der Cellulose weist die Ablauge aus dem Sulfitverfahren in ihrer Festsubstanz bei Verwendung von Nadelhölzern ca. 55 Gew.-% und bei Verwendung von Laubhölzern ca. 42 Gew.-% an Ligninsulfonat auf.

Als erfindungsgemäße Ligninverbindungen L können alle Ligninverbindungen, Ligninumsetzungsprodukte und/oder Ligninabbauprodukte einesetzt werden, welche bei 20 °C und 1 atm (1,013 bar absolut) eine Löslichkeit ≥ 10 g, vorteilhaft ≥ 50 g und insbesondere vorteilhaft ≥ 100 g pro 100 g entionisiertes Wasser aufweisen. Erfindungsgemäß sind jedoch auch solche Ausführungsformen umfasst, deren Ligninverbindung L eine Löslichkeit < 10 g pro 100 g entionisiertem Wasser bei 20 °C und 1 atm aufweist. Abhängig von der Menge dieser eingesetzten Ligninverbindungen L, können diese dann auch in Form ihrer wässrigen Suspension vorliegen. Werden erfindungsgemäß Ligninverbindungen L in Art und Menge so eingesetzt, dass sie in wässriger Suspension vorliegen, so ist es vorteilhaft, wenn die in wässrigem Medium suspendierten Partikel der Ligninverbindung L einen mittleren Teilchendurchmesser ≤ 5 μm, bevorzugt ≤ 3 μm und insbesondere bevorzugt ≤ 1 μm aufweisen. Die Bestimmung der mittleren Teilchendurchmesser erfolgt wie bei den wässrigen Polymerisat P-Dispersionen über die Methode der quasielastischen Lichtstreuung (ISO-Norm 13 321). Insbesondere bevorzugt werden jedoch Ligninverbindungen L eingesetzt, welche bei 20 °C und 1 atm (1,013 bar absolut) eine Löslichkeit ≥ 10 g pro 100 g entionisiertem Wasser aufweisen.

Erfindungsgemäß vorteilhaft werden Kraft-Lignine und Ligninsulfonate eingesetzt, wobei Lininsulfonate insbesondere bevorzugt sind. Obwohl alle Salze der Ligninsulfonsäure im Rahmen der Erfindung eingesetzt werden können, werden Calcium-Ligninsulfonat (CAS Nr. 8061-52-7), Natrium-Ligninsulfonat (CAS Nr. 8061-51-6), Magnesium-Ligninsulfonat (CAS Nr. 8061-54-9) und/oder Ammonium-Ligninsulfonat (CAS Nr. 8061-53-8) bevorzugt eingesetzt. Besonders bevorzugt sind Natrium- und Calcium-Ligninsulfonat, wobei Natrium-Ligninsulfonat insbesondere bevorzugt ist. Diese Verbindungen können beispielsweise im Handel unter den Bezeichnungen BORREMENT® CA 120, BORRESPERSE® NA 200 oder BORRESPERSE® NA 220 der Firma BORREGAARD DEUTSCHLAND GmbH oder StarLig® Na 2420 der Firma LignoStar Deutschland GmbH erhalten werden. Vorteilhaft werden Ligninsulfonate eingesetzt, welche aus sogenanntem Weichholz gewonnen wurden. Unter Weichholz werden solche Hölzer verstanden, welche eine Darrdichte

< 0,55 g/cm$^3$ (Rohdichte von Holz bei 0 % Holzfeuchte [DIN 52183]) aufweisen, wie insbesondere die Hölzer der schnell wachsenden Weiden, Pappeln, Linden sowie die Hölzer von Nadelbäumen, wie insbesondere Kiefern, Tannen, Douglasien, Lärchen und Fichten. Mit besonderem Vorteil werden Ligninsulfonate eingesetzt, welche aus Nadelhölzern gewonnen wurden.

Erfindungswesentlich ist, dass die Gesamtmenge der Ligninverbindung L dem wässrigen Polymerisationsmedium vor oder während der Emulsionspolymerisation der Monomeren A bis C oder nach Beendigung der Emulsionspolymerisation der wässrigen Polymerisat P-Dispersion zugegeben werden kann. Selbstverständlich ist es auch möglich, lediglich eine Teilmenge der Ligninverbindung L dem wässrigen Polymerisationsmedium vor oder während der Emulsionspolymerisation der Monomeren A bis C und die verbleibende Restmenge nach Beendigung der Emulsionspolymerisation der wässrigen Dispersion des Polymerisats P zuzugeben. Wird die eine Teil- oder die Gesamtmenge der Ligninverbindung L vor oder während der Emulsionspolymerisation der Monomeren A bis C zugegeben, kann diese in der Regel die Funktion des Schutzkolloids übernehmen, wodurch die Menge anderer Schutzkolloide und/oder Emulgatoren reduziert bzw. auf diese gegebenenfalls vollständig verzichtet werden kann.

In einer erfindungsgemäß bevorzugten Ausführungsform erfolgt die Zugabe der Gesamtmenge an Ligninverbindung L nach der Emulsionspolymerisation der Monomeren A bis C zur wässrigen Polymerisat P-Dispersion. Entsprechend ist erfindungsgemäß auch ein Verfahren umfasst, welches dadurch gekennzeichnet ist, dass die Gesamtmenge der Ligninverbindung L zu der wässrigen Dispersion des Polymerisats P zugegeben wird.

Erfindungsgemäß beträgt die Menge an Ligninverbindung L ≥ 10 und ≤ 60 Gew.-Teile, vorteilhaft ≥ 15 und ≤ 50 Gew.-Teile und insbesondere vorteilhaft ≥ 20 und ≤ 45 Gew.-Teile pro 100 Gew.-Teilen Polymerisat P (entsprechend der zur Polymerisation eingesetzten Gesamtmenge an Monomeren A bis C).

Wesentlich ist, dass die erfindungsgemäße wässrige Bindemittelzusammensetzung neben dem Polymerisat P und der Ligninverbindung L zusätzlich noch weitere, dem Fachmann in Art und Menge geläufige Komponenten, wie beispielsweise Verdicker, Pigmentverteiler, Dispergiermittel, Emulgatoren, Puffersubstanzen, Neutralisationsmittel, Biozide, Entschäumer, Polyolverbindungen mit wenigstens 2 Hydroxygruppen und mit einem Molekulargewicht ≤ 200 g/mol, Filmbildehilfsmittel, organische Lösungsmittel, Pigmente oder Füllstoffe etc. enthalten kann.

Vorteilhaft enthält die wässrige Bindemittelzusammensetzung jedoch ≤ 1 Gew.-%, insbesondere vorteilhaft ≤ 0,5 Gew.-% einer Polyolverbindung mit wenigstens 2 Hydroxygruppen und mit einem Molekulargewicht ≤ 200 g/mol, insbesondere ≤ 150 g/mol, wie beispielsweise Ethylenglykol, 1,2-Propandiol, 1,3-Propandiol, 1,2,3-Propantriol, 1,2-Butandiol, 1,4-Butandiol, 1,2,3,4-Butantetrol, Diethanolamin, Triethanolamin etc., bezogen auf die Summe der Gesamtmengen an Polymerisat P und Ligninverbindung L.

Ebenfalls von Bedeutung ist, dass die vorliegende wässrige Bindemittelzusammensetzung entfettetes Sojamehl mit einer mesh-Größe von ≤ 43 μm in Mengen enthalten kann, die jedoch wenigstens 20 Gew.-% unter den Mengen liegen, welche in der EP-A 2199320, Abschnitt [0035] offenbart sind. Mit besonderem Vorteil enthält die erfindungsgemäße Bindemittelzusammensetzung jedoch keinerlei derartiges entfettetes Sojamehl.

Die erfindungsgemäße wässrige Bindemittelzusammensetzung eignet sich vorteilhaft zur Verwendung als Bindemittel für körnige und/oder faserförmige Substrate. Mit Vorteil lassen sich die genannten wässrigen Bindemittelzusammensetzungen daher bei der Herstellung von Formkörpern aus körnigen und/oder faserförmigen Substraten verwenden. Des Weiteren eignen sich die erfindungsgemäßen Bindemittelzusammensetzungen als Bindemittel in nicht zementären Beschichtungen, wie beispielsweise flexible Dachbeschichtungen, Feuchtraumbeschichtungen oder Spachtelmassen, Dichtmassen, wie beispielsweise Fugendichtstoffe und Klebstoffe, wie beispielsweise Montageklebstoffe, Fliesenklebstoffe, Kontaktklebstoffe oder Bodenbelagsklebstoffe.

Körnige und/oder faserförmige Substrate sind dem Fachmann geläufig. Beispielsweise handelt es sich hierbei um Holzschnitzel, Holzfasern, Cellulosefasern, Textilfasern, Kunststofffasern, Glasfasern, Mineralfasern oder Naturfasern wie Jute, Flachs, Hanf oder Sisal, aber auch Korkschnitzel oder Sand sowie andere organische oder anorganische natürliche und/oder synthetische körnige und/oder faserförmige Verbindungen, deren längste Ausdehnung im Falle von körnigen Substraten ≤ 10 mm, bevorzugt ≤ 5 mm und insbesondere ≤ 2 mm beträgt. Selbstverständlich soll der Begriff Substrat auch die aus Fasern erhältlichen Faservliese, wie beispielsweise so genannte mechanisch verfestigte, beispielsweise genadelte oder chemisch vorgebundene Faservliese mit umfassen. Insbesondere vorteilhaft ist die erfindungsgemäße wässrige Bindemittelzusammensetzung als formaldehydfreies bzw. formaldehydreduziertes Bindemittelsystem für die vorgenannten Fasern und mechanisch verfestigte oder chemisch vorgebundene Faservliese geeignet.

Das Verfahren zur Herstellung eines Formkörpers aus einem körnigen und/oder faserförmigen Substrat und der vorgenannten wässrigen Bindemittelzusammensetzung erfolgt vorteilhaft dergestalt, dass die erfindungsgemäße wässrige Bindemittelzusammensetzung auf ein körniges und/oder faserförmiges Substrat aufgebracht wird (Imprägnierung), gegebenenfalls das mit der wässrigen Bindemittelzusammensetzung behandelte (imprägnierte) körnige und/oder faserförmige Substrat in Form gebracht wird und anschließend das imprägnierte körnige und/oder faserförmige Substrat einem thermischen Behandlungsschritt bei einer Temperatur ≥ 110 °C, vorteilhaft ≥ 130 °C und insbesondere vorteilhaft ≥ 150 °C unterzogen wird, wobei die Bindemittelzusammensetzung verfilmt und aushärtet.

Wesentlich ist, dass die essentiellen Komponenten der wässrigen Bindemittelzusammensetzung, d.h. die wässrige Dispersion des Polymerisats P und die Ligninverbindung L, insbesondere in Form ihrer Lösung oder Suspension, vorab des Aufbringens auf das körnige und/oder faserförmige Substrat, homogen gemischt werden können. Es ist aber auch möglich, diese beiden Komponenten erst unmittelbar vor dem Aufbringen, beispielsweise mit einer statischen und/oder dynamischen Mischeinrichtung zu mischen. Selbstverständlich ist es auch möglich, zuerst die wässrige Dispersion des Polymerisats P und danach die wässrige Lösung oder Suspension der Ligninverbindung L auf das körnige und/oder faserförmige Substrat aufzubringen, wobei die Mischung auf dem körnigen und/oder faserförmigen Substrat erfolgt. In analoger Weise kann aber auch zuerst die wässrige Lösung oder Suspension der Ligninverbindung L und danach die wässrige Dispersion des Polymerisats P auf das körnige und/oder faserförmige Substrat aufgebracht werden. Selbstverständlich sollen auch Mischformen des Aufbringens der beiden essentiellen Komponenten erfindungsgemäß umfasst sein.

Die Imprägnierung des körnigen und/oder faserförmigen Substrats erfolgt in der Regel dergestalt, dass die wässrige Bindemittelmittelzusammensetzung gleichmäßig auf die Oberfläche des faserförmigen und/oder körnigen Substrats aufgebracht wird. Dabei wird die Menge an wässriger Bindemittelzusammensetzung so gewählt, dass pro 100 g körnigem und/oder faserförmigem Substrat ≥ 1 g und ≤ 100 g, bevorzugt ≥ 2 g und ≤ 50 g und insbesondere bevorzugt ≥ 5 g und ≤ 30 g Bindemittel (berechnet als Summe der Gesamtmengen von Polymerisat P und Ligninverbindung L auf Feststoffbasis) eingesetzt werden. Die Imprägnierung des körnigen und/oder faserförmigen Substrats ist dem Fachmann geläufig und erfolgt beispielsweise durch Tränkung oder durch Besprühen des körnigen und/oder faserförmigen Substrats.

Nach der Imprägnierung wird das körnige und/oder faserförmige Substrat gegebenenfalls in die gewünschte Form gebracht, beispielsweise durch Einbringen in eine beheizbare Presse oder Form. Daran anschließend wird das in Form gebrachte imprägnierte körnige und/oder faserförmige Substrat in einer dem Fachmann geläufigen Art und Weise getrocknet und ausgehärtet.

Häufig erfolgt die Trocknung bzw. Aushärtung des gegebenenfalls in Form gebrachten imprägnierten körnigen und/oder faserförmigen Substrats in zwei Temperaturstufen, wobei die Trocknungsstufe bei einer Temperatur < 100 °C, bevorzugt ≥ 20 °C und ≤ 90 °C und insbesondere bevorzugt ≥ 40 und ≤ 80 °C und die Aushärtungsstufe bei einer Temperatur ≥ 110 °C, bevorzugt ≥ 130 und ≤ 150 °C und insbesondere bevorzugt ≥ 180 °C und ≤ 220 °C erfolgt.

Selbstverständlich ist es aber auch möglich, dass die Trocknungsstufe und die Aushärtungsstufe der Formkörper in einem Arbeitsschritt, beispielsweise in einer Formpresse erfolgen.

Die nach dem erfindungsgemäßen Verfahren zugänglichen Formkörper weisen vorteilhafte Eigenschaften, insbesondere eine verbesserte Reißkraft sowie eine verbesserte Wärmestandfestigkeit im Vergleich zu den Formkörpern des Standes der Technik auf. Demgemäß sind erfindungsgemäß auch die nach dem vorgenannten Verfahren zugänglichen Formkörper umfasst.

Insbesondere vorteilhaft eignet sich die erfindungsgemäße wässrige Bindemittelzusammensetzung daher zur Herstellung von Faservliesen auf Polyester- und/oder Glasfaserbasis, welche sich ihrerseits insbesondere zur Herstellung von bitumierten Dachbahnen verwenden lässt. Dabei ist die Herstellung von bitumierten Dachbahnen dem Fachmann geläufig und erfolgt insbesondere durch Aufbringen von verflüssigtem, gegebenenfalls modifiziertem Bitumen auf eine bzw. beide Seiten eines mit einer erfindungsgemäßen Bindemittelzusammensetzung gebundenen Polyester- und/oder Glasfaservlieses. Demgemäß sind erfindungsgemäß auch die vorgenannten bitumierten Dachbahnen umfasst.

Die Erfindung soll anhand nachfolgender nicht einschränkender Beispiele erläutert werden.

Beispiele

I Herstellung der Polymerisate P in Form ihrer wässrigen Dispersionen

Polymerisatdispersion 1 (P1)

In einem 2 l-Glaskolben, ausgerüstet mit einem Rührer und 4 Dosiereinrichtungen wurden bei 20 bis 25 °C (Raumtemperatur) und unter Stickstoffatmosphäre 429 g entionisiertes Wasser sowie 19,5 g einer 33 gew.-%igen wässrigen Polystyrolsaatdispersion (mittlerer Teilchendurchmesser 32 nm) vorgelegt und unter Rühren auf 90 °C aufgeheizt. Zeitgleich beginnend wurden nun Zulauf 1 in Form einer wässrigen Emulsion über einen Zeitraum von 3,5 Stunden und Zulauf 2 in Form einer wässrigen Lösung über einen Zeitraum von 4 Stunden mit kontinuierlich mit gleichbleibenden Mengenströmen unter Aufrechterhaltung der vorgenannten Temperatur zudosiert.

Zulauf 1:

| | |
|---|---|
| 17,0 g | Acrylsäure |
| 85,0 g | Acrylnitril |
| 392 g | Styrol |
| 281 g | n-Butylacrylat |
| 73,0 g | einer 35 gew.-%igen wässrigen Lösung von N-Methylolacrylamid |
| 17,8 g | einer 45 gew.-%igen wässrigen Lösung eines Alkylarylsulfonsäuregemisches (Dowfax® 2A1) |
| 192 g | entionisiertes Wasser |

Zulauf 2:

| | |
|---|---|
| 85,0 g | entionisiertes Wasser |
| 6,4 g | Natriumpersulfat |

Anschließend ließ man das Polymerisationsgemisch noch 30 Minuten bei 90 °C nachpolymerisieren und kühlte es auf Raumtemperatur ab. Durch Zugabe von 25 gew.-%iger wässriger Natronlauge wurde ein pH-Wert von 7,0 eingestellt. Die erhaltene wässrige Polymerisatdispersion wies einen Feststoffgehalt von 49,4 Gew.-% bezogen auf das Gesamtgewicht der wässrigen Dispersion auf. Der zahlenmittlere Teilchendurchmesser wurde zu 202 nm bestimmt. Die Glasübergangstemperatur eines ausschließlich aus den Monomeren C gebildeten Polymerisats errechnet sich nach der Fox-Gleichung zu 33 °C; verwendet wurden die in Ullmann's Encyclopedia of Industrial Chemistry (1992), Vol. A21, Seite 169 angegebenen Glasübergangstemperaturen für n-Butylacrylat: 230 K (-43 °C), Styrol: 380 K (107 °C) und Acrylnitril: 378 K (105 °C).

Die Feststoffgehalte wurden generell bestimmt, indem eine definierte Menge der wässrigen Polymerisatdispersion (ca. 0,8 g) mit Hilfe des Feuchtebestimmers HR73 der Firma Mettler Toledo bei einer Temperatur von 130 °C bis zur Gewichtskonstanz getrocknet wurden (ca. 2 Stunden). Es wurden jeweils zwei Messung durchgeführt. Der jeweils angegebene Wert stellt den Mittelwert dieser Messungen dar.

Die zahlenmittleren Teilchendurchmesser der Polymerisatteilchen wurden generell durch dynamische Lichtstreuung an einer 0,005 bis 0,01 gewichtsprozentigen wässrigen Polymerisatdispersion bei 23 °C mittels eines Autosizers IIC der Fa. Malvern Instruments, England, ermittelt. Angegeben wird der mittlere Durchmesser der Kumulantenauswertung (cumulant z average) der gemessenen Autokorrelationsfunktion (ISO-Norm 13321).

Die Bestimmung der Glasübergangstemperaturen erfolgte generell nach dem DSC-Verfahren (Differential Scanning Calorimetry, 20 K/min, midpoint-Messung, DIN 53 765).

Polymerisatdispersion 2 (P2)

Die Herstellung der P2 erfolgte analog zur Herstellung der P1 mit dem Unterschied, dass in Zulauf 1 239 g anstelle von 192 g entionisiertes Wasser und 25,6 g Glycidylacrylat anstelle von 73 g einer 35 gew.-%igen wässrigen Lösung von N-Methylolacrylamid eingesetzt wurden.

Die erhaltene wässrige Polymerisatdispersion wies einen Feststoffgehalt von 49,7 Gew.-% bezogen auf das Gesamtgewicht der wässrigen Dispersion auf. Der zahlenmittlere Teilchendurchmesser wurde zu 171 nm bestimmt.

Polymerisatdispersion 3 (P3)

Die Herstellung der P3 erfolgte analog zur Herstellung der P2 mit dem Unterschied, dass in Zulauf 1 25,6 g 2-Hydroxyethylacrylat anstelle von 25,6 g Glycidylacrylat eingesetzt wurden.

Die erhaltene wässrige Polymerisatdispersion wies einen Feststoffgehalt von 49,6 Gew.-% bezogen auf das Gesamtgewicht der wässrigen Dispersion auf. Der zahlenmittlere Teilchendurchmesser wurde zu 194 nm bestimmt.

Polymerisatdispersion 4 (P4)

Die Herstellung der P4 erfolgte analog zur Herstellung der P2 mit dem Unterschied, dass in Zulauf 1 25,6 g 3-Methacryloxypropyltrimethylsilan anstelle von 25,6 g Glycidylacrylat eingesetzt wurden.

Die erhaltene wässrige Polymerisatdispersion wies einen Feststoffgehalt von 49,9 Gew.-% bezogen auf das Gesamtgewicht der wässrigen Dispersion auf. Der zahlenmittlere Teilchendurchmesser wurde zu 187 nm bestimmt.

Polymerisatdispersion 5 (P5)

Die Herstellung der P5 erfolgte analog zur Herstellung der P2 mit dem Unterschied, dass in Zulauf 1 8,6 g Allylmethacrylat anstelle von 25,6 g Glycidylacrylat sowie 400 g anstelle von 392 Styrol und 290 g anstelle von 281 n-Butylacrylat eingesetzt wurden.

Die erhaltene wässrige Polymerisatdispersion wies einen Feststoffgehalt von 49,4 Gew.-% bezogen auf das Gesamtgewicht der wässrigen Dispersion auf. Der zahlenmittlere Teilchendurchmesser wurde zu 179 nm bestimmt.

Polymerisatdispersion 6 (P6)

Die Herstellung der P6 erfolgte analog zur Herstellung der P2 mit dem Unterschied, dass in Zulauf 1 25,6 g Diacetonacrylamid anstelle von 25,6 g Glycidylacrylat eingesetzt wurden.

Die erhaltene wässrige Polymerisatdispersion wies einen Feststoffgehalt von 49,8 Gew.-% bezogen auf das Gesamtgewicht der wässrigen Dispersion auf. Der zahlenmittlere Teilchendurchmesser wurde zu 189 nm bestimmt.

Polymerisatvergleichsdispersion 1 (V1)

Die Herstellung der V1 erfolgte analog zur Herstellung der P1 mit dem Unterschied, dass in Zulauf 1 265 g anstelle von 192 g entionisiertes Wasser und keine 35 gew.-%ige wässrige Lösung von N-Methylolacrylamid eingesetzt wurden.

Die erhaltene wässrige Polymerisatdispersion wies einen Feststoffgehalt von 49,0 Gew.-% bezogen auf das Gesamtgewicht der wässrigen Dispersion auf. Der zahlenmittlere Teilchendurchmesser wurde zu 185 nm bestimmt.

Polymerisatvergleichsdispersion 2 (V2)

Die Herstellung der V2 erfolgte analog zur Herstellung der P1 mit dem Unterschied, dass in Zulauf 1 170 g anstelle von 281 g n-Butylacrylat und 503 g anstelle von 392 g Styrol eingesetzt wurden.

Die erhaltene wässrige Polymerisatdispersion wies einen Feststoffgehalt von 49,4 Gew.-% bezogen auf das Gesamtgewicht der wässrigen Dispersion auf. Der zahlenmittlere Teilchendurchmesser wurde zu 175 nm bestimmt. Die Glasübergangstemperatur eines ausschließlich aus den Monomeren C gebildeten Polymerisats errechnet sich nach der Fox-Gleichung zu 58 °C.

II Herstellung der gebundenen Faservliese und anwendungstechnische Untersuchungen

Zur Herstellung der gebundenen Faservliese wurde als Rohvlies ein genadeltes Polyethylenterephthalat-Spinnvlies (40 cm Länge, 37 cm Breite) mit einer Dichte von 125 $g/m^2$ der Fa. Freudenberg-Politex verwendet.

Zur Herstellung der Imprägnierflotten wurden die wässrigen Polymerisatdispersionen P1 bis P6 sowie V1 und V2 zuerst mit entionisiertem Wasser auf einen Feststoffgehalt von 49 Gew.-% verdünnt. Daran anschließend wurden jeweils zu 160 Gew.-Teilen der erhaltenen wässrigen Polymerisatdispersionen P1 bis P6 sowie V1 und V2 bei Raumtemperatur 40 Gew.-Teile einer wässrigen Lösung von Na-Ligninsulfonat (StarLig® Na 2420 der Firma LignoStar Deutschland GmbH) mit einem Feststoffgehalt von 50 Gew.-% zugegeben und homogen gemischt. Die so erhaltenen Mischungen wurden anschließend unter homogener Mischung mit entionisiertem Wasser auf einen Feststoffgehalt von 15 Gew.-% verdünnt und als Imprägnierflotten IF1 bis IF6 sowie IFV1 und IFV2 bezeichnet. Des Weiteren wurde die wässrige Polymerisatdispersion P1 ohne Zusatz von Ligninsulfonatlösung mit entionisiertem Wasser auf einen Feststoffgehalt von 15 Gew.-% verdünnt. Die erhaltene verdünnte wässrige Polymerisatdispersion wird als Imprägnierflotte IFV3 bezeichnet. Ferner wurde die wässrige Polymerisatdispersion P1 derart mit einer handelsüblichen 70 gew.-%igen wässrigen Lösung eines selbstvernetzenden MelaminFormaldehyd-Harzes (Saduren® 163 der Firma BASF SE) gemischt, dass das Feststoffgewichtsverhältnis der wässrigen Polymerisatdispersion P1 zur wässrigen Melamin-Formaldehyd-Harzlösung 80:20 betrug. Daran anschließend wurde Zugabe von entionisiertem Wasser ein Feststoffgehalt von 15 Gew.-% eingestellt. Die erhaltene verdünnte wässrige Lösung wird als Imprägnierflotte IFV4 bezeichnet.

Zur Herstellung der gebundenen Faservliese wurden die Rohvliese in einer Imprägnieranlage HVF mit Foulard der Firma Mathis (Gummiwalze Shore A = 85° / Stahlwalze) in Längsrichtung mit der jeweiligen Imprägnierflotte IF1 bis IF6 sowie IFV1 bis IFV4 getränkt. Dabei wurde jeweils der Nasseintrag auf 197 g Imprägnierflotte pro Quadratmeter (entsprechend einem Feststoffanteil von 29,6 $g/m^2$) eingestellt. Daran anschließend wurden die erhaltenen imprägnierten Faservliese in einem Labortrockner LTV mit Nadelrahmen der Fa. Mathis (im Umluftbetrieb) getrocknet und gehärtet. Hierzu wurden die jeweiligen imprägnierten Faservliese auf einen aufgeklappten Nadelrahmen aufgelegt, durch Zuklappen fixiert und anschließend für 3 Minuten bei 200 °C im Labortrockner ausgehärtet. Die dabei erhaltenen gebundenen Faservliese werden in Abhängigkeit der verwendeten Imprägnierflotten als Faservliese F1 bis F6 sowie FV1 bis FV4

bezeichnet.

Bestimmung der Reißkraft in Querrichtung

Die Bestimmung der Reißkraft in Querrichtung der Faservliese F1 bis F6 sowie FV1 bis FV4 bei Raumtemperatur erfolgte nach DIN 52123 mit Hilfe einer Reißmaschine der Fa. Frank (Modell 71565). Es wurden jeweils 5 separate Messungen durchgeführt. Die in Tabelle 1 angegebenen Messergebnisse in N/50 mm stellen die jeweiligen Mittelwerte dieser Messungen dar. Dabei ist die Reißkraft in Querrichtung umso besser zu bewerten, je höher die erhaltenen Messwerte ausfielen.

Bestimmung der Wärmestandfestigkeit

Die Bestimmung der Wärmestandfestigkeit der Faservliese F1 bis F6 sowie FV1 bis FV4 erfolgte durch Dehnmessungen mittels einer Reißmaschine der Firma Zwick (Modell Z10) mit integrierter Temperierkammer. Hierzu wurden aus den Faservliesen F1 bis F6 sowie FV1 bis FV4 in Längsrichtung 50 x 210 mm-Streifen ausgestanzt und in die Zugvorrichtung mit einer Einspannlänge von 100 mm eingespannt. Nach Einbringung in die Temperierkammer wurde der jeweilige Prüfstreifen für 60 Minuten bei 180 °C temperiert und danach bei dieser Temperatur mit einer Abzugsgeschwindigkeit von 150 mm/min mit steigender Zugkraft gedehnt. Bei Erreichen einer Zugkraft von 40 N/50 mm wurde die Dehnung der Prüfstreifen in Prozent bestimmt. Dabei ist die Wärmestandfestigkeit umso besser zu bewerten, je niedriger die erhaltene Dehnung ausfiel. Es wurden jeweils 5 separate Messungen durchgeführt. Die ebenfalls in Tabelle angegebenen Werte stellen die Mittelwerte dieser Messungen dar.

Tabelle 1: Ergebnisse der Reißkraft in Querrichtung und der Wärmestandfestigkeit der Faservliese F1 bis F6 sowie FV1 bis FV4

| Faservlies | Querreißkraft bei Raumtemperatur [in N/ 50 mm] | Dehnung bei 40 N/50 mm und 180 °C [in %] |
|---|---|---|
| F1 | 332 | 2,9 |
| F2 | 324 | 3,0 |
| F3 | 312 | 3,2 |
| F4 | 317 | 3,1 |
| F5 | 321 | 3,0 |
| F6 | 314 | 3,2 |
| FV1 | 294 | 3,7 |
| FV2 | 298 | 3,8 |
| FV3 | 301 | 3,6 |
| FV4 | 311 | 3,0 |

Aus den Ergebnissen ist klar ersichtlich, dass die mit den erfindungsgemäßen Bindemittelzusammensetzungen hergestellten Faservliese eine verbesserte Querreißkraft bei Raumtemperatur und/oder eine geringere Dehnung bei 180 °C aufwiesen.

## Patentansprüche

**1.** Wässrige Bindemittelzusammensetzung, enthaltend als wesentliche Bindemittelkomponenten

a) wenigstens ein Polymerisat P, aufgebaut aus

| | |
|---|---|
| ≥ 0,1 und ≤ 10 Gew.-% | wenigstens einer monoethylenisch ungesättigten Verbindung mit wenigstens einer siliziumhaltigen Gruppe, einer Epoxy-, Hydroxyalkyl-, N-Methylol- oder Carbonylgruppe und/oder wenigstens einer Verbindung, welche wenigstens zwei nichtkonjugierte ethylenisch ungesättigte Gruppen aufweist (Monomere A) |
| ≥ 0 und < 5 Gew.-% | wenigstens einer monoethylenisch ungesättigten $C_3$-bis $C_6$-Mono- und/oder $C_4$-$C_6$-Dicarbonsäure sowie deren Salze und Anhydride (Monomere B), und |

(fortgesetzt)

| | |
|---|---|
| > 85 und ≤ 99,9 Gew.-% | weiterer, sich von den Monomeren A und B unterscheidender, ethylenisch ungesättigter Verbindungen, wobei diese in Art und Menge so gewählt werden, dass ein allein aus diesen ethylenisch ungesättigten Verbindungen in einpolymerisierter Form aufgebautes Polymerisat eine Glasübergangstemperatur im Bereich ≥ 10 und ≤ 50 °C aufweisen würde (Monomere C), |

in einpolymerisierter Form, wobei sich die Mengen der Monomeren A bis C auf 100 Gew.-% aufsummieren, und
b) wenigstens eine Ligninverbindung L, wobei deren Menge so bemessen ist, dass sie ≥ 10 und ≤ 60 Gew.-Teile pro 100 Gew.-Teilen Polymerisat P beträgt.

**2.** Wässrige Bindemittelzusammensetzung nach Anspruch 1, wobei das wenigstens eine Monomere A ausgewählt ist aus der Gruppe umfassend N-Methylolacrylamid, N-Methylolmethacrylamid, Glycidylacrylat, Glycidylmethacrylat, 2-Hydroxyethylacrylat, 2-Hydroxyethylmethacrylat, 1,4-Butylenglykoldiacrylat, Allylmethacrylat und/oder Divinylbenzol.

**3.** Wässrige Bindemittelzusammensetzung nach einem der Ansprüche 1 oder 2, wobei die Monomeren C ausgewählt sind aus der Gruppe umfassend konjugierte aliphatische $C_4$-bis Cg-Diene, Ester aus Vinylalkohol und einer $C_1$- bis $C_{10}$-Monocarbonsäure, $C_1$- bis $C_{10}$-Alkylacrylate, $C_1$- bis $C_{10}$-Alkylmethacrylate, ethylenisch ungesättigte $C_3$- bis $C_6$-Monocarbonsäurenitrile, ethylenisch ungesättigte $C_4$- bis $C_6$-Dicarbonsäurenitrile, $C_5$- bis $C_{10}$-Cycloalkylacrylate und -methacrylate, $C_1$- bis $C_{10}$-Dialkylmaleinate und $C_1$- bis $C_{10}$-Dialkylfumarate und vinylaromatische Monomere.

**4.** Wässrige Bindemittelzusammensetzung nach einem der Ansprüche 1 bis 3, wobei das Polymerisat P in Form einer wässrigen Polymerisatdispersion eingesetzt wird.

**5.** Wässrige Bindemittelzusammensetzung nach Anspruch 4, wobei die Polymerisatteilchen der wässrigen Polymerisatdispersion einen zahlenmittleren Teilchendurchmesser ≥ 50 und ≤ 250 nm aufweisen.

**6.** Wässrige Bindemittelzusammensetzung nach einem der Ansprüche 1 bis 5, wobei das Polymerisat P aufgebaut ist aus

| | |
|---|---|
| ≥ 0,1 und ≤ 5 Gew.-% | Monomere A |
| ≥ 0,1 und ≤ 4 Gew.-% | Monomere B, und |
| ≥ 91 und ≤ 99,8 Gew.-% | Monomere C. |

**7.** Wässrige Bindemittelzusammensetzung nach einem der Ansprüche 1 bis 6, wobei das Polymerisat P aufgebaut ist aus

| | |
|---|---|
| ≥ 0,5 und ≤ 3 Gew.-% | N-Methylolacrylamid, N-Methylolmethacrylamid, Glycidylacrylat, Glycidylmethacrylat, 2-Hydroxyethylacrylat, 2-Hydroxyethylmethacrylat, 1,4-Butylenglykoldiacrylat, Allylmethacrylat und/oder Divinylbenzol |
| ≥ 0,1 und ≤ 3 Gew.-% | Acrylsäure, Methacrylsäure, Maleinsäure, Maleinsäureanhydrid und/oder Itaconsäure |
| ≥ 94 und ≤ 99,4 Gew.-% | 2-Ethylhexylacrylat, n-Butylacrylat, Acrylnitril, 1,4-Butadien, Ethylacrylat, Vinylacetat, Methylmethacrylat, Styrol und/oder tert. -Butyl methacrylat. |

**8.** Wässrige Bindemittelzusammensetzung nach einem der Ansprüche 1 bis 7, wobei als Ligninverbindung L ein Ligninsulfonat eingesetzt wird.

**9.** Wässrige Bindemittelzusammensetzung nach Anspruch 8, wobei das Ligninsulfonat aus Nadelholz gewonnen wurde.

**10.** Wässrige Bindemittelzusammensetzung nach einem der Ansprüche 1 bis 9, wobei ≥ 20 und ≤ 45 Gew.-Teile S Ligninverbindung L pro 100 Gew.-Teilen Polymerisat P eingesetzt werden.

**11.** Verfahren zur Herstellung einer wässrige Bindemittelzusammensetzung nach einem der Ansprüche 4 bis 10, **dadurch gekennzeichnet, dass** die Gesamtmenge der Ligninverbindung L zu der wässrigen Dispersion des Polymerisats P zugegeben wird.

**12.** Verwendung einer wässrigen Bindemittelzusammensetzung gemäß einem der Ansprüche 1 bis 11 als Bindemittel für körnige und/oder faserförmige Substrate.

**13.** Verfahren zur Herstellung eines Formkörpers aus körnigen und/oder faserförmigen Substraten, **dadurch gekennzeichnet, dass** eine wässrige Bindemittelzusammensetzung gemäß einem der Ansprüche 1 bis 10 auf das körnige und/oder faserförmige Substrat aufgebracht wird, gegebenenfalls das so behandelte körnige und/oder faserförmige Substrat in Form gebracht wird und anschließend das so erhaltene körnige und/oder faserförmige Substrat einem thermischen Behandlungsschritt bei einer Temperatur ≥ 110 °C unterzogen wird.

**14.** Verfahren zur Herstellung eines Formkörpers gemäß Anspruch 13, **dadurch gekennzeichnet, dass** die Menge an wässriger Bindemittelzusammensetzung so gewählt wird, dass pro 100 g körnigem und/oder faserförmigem Substrat ≥ 1 und ≤ 100 g Bindemittel (entsprechend der Summe der Gesamtmengen an Polymerisat P und Ligninverbindung L) aufgebracht werden.

**15.** Formkörper erhältlich nach einem Verfahren gemäß einem der Ansprüche 13 oder 14.

**16.** Verwendung von Formkörpern gemäß Anspruch 15 zur Herstellung bitumierter Dachbahnen.

**17.** Bitumierte Dachbahnen hergestellt unter Verwendung von Formkörpern gemäß Anspruch 15.

**Claims**

**1.** An aqueous binder composition comprising as essential binder components

a) at least one polymer P constructed from

| | |
|---|---|
| ≥ 0.1 and ≤ 10 wt% | of at least one monoethylenically unsaturated compound having at least one silicon-containing group, an epoxy, hydroxyalkyl, N-methylol or carbonyl group, and/or of at least one compound which has at least two nonconjugated ethylenically unsaturated groups (monomers A) |
| ≥ 0 and < 5 wt% | of at least one monoethylenically unsaturated $C_3$ to $C_6$ monocarboxylic and/or $C_4$-$C_6$-dicarboxylic acid and also the salts and anhydrides thereof (monomers B), and |
| ≥ 85 and ≤ 99.9 wt% | of further ethylenically unsaturated compounds, different from the monomers A and B, the nature and amount of these ethylenically unsaturated compounds being selected such that a polymer constructed solely from them in polymerized form would have a glass transition temperature in the range ≥ 10 and ≤ 50°C (monomers C), |

in polymerized form, wherein the amounts of monomers A to C sum to 100 wt%, and
b) at least one lignin compound L, the amount of which is determined such that it is ≥ 10 and ≤ 60 parts by weight per 100 parts by weight of polymer P.

**2.** The aqueous binder composition according to claim 1 wherein the at least one monomer A is selected from the group encompassing N-methylolacrylamide, N-methylolmethacrylamide, glycidyl acrylate, glycidyl methacrylate, 2-hydroxyethyl acrylate, 2-hydroxyethyl methadrylate, 1,4-butylene glycol diacrylate, allyl methacrylate and/or divinylbenzene.

**3.** The aqueous binder composition according to either one of claims 1 or 2 wherein the monomers C are selected from the group encompassing conjugated aliphatic $C_4$ to $C_9$ dienes, esters of vinyl alcohol and a $C_1$ to $C_{10}$ monocarboxylic acid, $C_1$ to $C_{10}$ alkyl acrylates, $C_1$ to $C_{10}$ alkyl methacrylates, ethylenically unsaturated $C_3$ to $C_6$ monocarbonitriles, ethylenically unsaturated $C_4$ to $C_6$ dicarbonitriles, $C_5$ to $C_{10}$ cycloalkyl acrylates and methacrylates, $C_1$ to $C_{10}$ dialkyl maleates and $C_1$ to $C_{10}$ dialkyl fumarates and vinylaromatic monomers.

**4.** The aqueous binder composition according to any one of claims 1 to 3 wherein the polymer P is used in the form of an aqueous polymer dispersion.

**5.** The aqueous binder composition according to claim 4 wherein the polymer particles of the aqueous polymer dispersion have a number average particle diameter ≥ 50 and ≤ 250 nm.

**6.** The aqueous binder composition according to any one of claims 1 to 5, wherein the polymer P is constructed from
≥ 0.1 and ≤ 5 wt% of monomers A
≥ 0.1 and ≤ 4 wt% of monomers B, and
≥ 91 and ≤ 99.8 wt% of monomers C.

**7.** The aqueous binder composition according to any one of claims 1 to 6 wherein the polymer P is constructed from

| | |
|---|---|
| ≥ 0.5 and ≤ 3 wt% | of N-methylolacrylamide, N-methylolmethacrylamide, glycidyl acrylate, glycidyl methacrylate, 2-hydroxyethyl acrylate, 2-hydroxyethyl methacrylate, 1,4-butylene glycol diacrylate, allyl methacrylate and/or divinylbenzene |
| ≥ 0.1 and ≤ 3 wt% | of acrylic acid, methacrylic acid, maleic acid, maleic anhydride and/or itaconic acid |
| ≥ 94 and ≤ 99.4 wt% | of 2-ethylhexyl acrylate, n-butyl acrylate, acrylonitrile, 1,4-butadiene, ethyl acrylate, vinyl acetate, methyl methacrylate, styrene and/or tert-butyl methacrylate. |

**8.** The aqueous binder composition according to any of claims 1 to 7, wherein a lignosulfonate is used as lignin compound L.

**9.** The aqueous binder composition according to claim 8, wherein the lignosulfonate has been obtained from coniferous wood.

**10.** The aqueous binder composition according to any one of claims 1 to 9 wherein ≥ 20 and ≤ 45 parts by weight of S lignin compound L are used per 100 parts by weight of polymer P.

**11.** A process for preparing an aqueous binder composition according to any one of claims 4 to 10 wherein the overall amount of the lignin compound L is added to the aqueous dispersion of the polymer P.

**12.** The use of an aqueous binder composition according to any one of claims 1 to 11 as binder for granular and/or fibrous substrates.

**13.** A process for producing a shaped article from granular and/or fibrous substrates wherein an aqueuos binder composition according to any one of claims 1 to 10 is applied to the granular and/or fibrous substrate, the granular and/or fibrous substrate thus treated is optionally shaped and then the granular and/or fibrous substrate thus obtained is subjected to a thermal treatment step at a temperature of ≥ 110°C.

**14.** The process for producing a shaped article according to claim 13 wherein the amount of aqueous binder composition is chosen such that ≥ 1 and ≤ 100 g of binder (corresponding to the summed overall amounts of polymer P and lignin compound L) are applied per 100 g of granular and/or fibrous substrate.

**15.** A shaped article obtainable by a process according to either of claims 13 and 14.

**16.** The use of a shaped article according to claim 15 for producing bituminized roofing membranes.

**17.** A bituminized roofing membrane obtained using a shaped article according to claim 15.

## Revendications

**1.** Composition aqueuse de liant, contenant en tant que composants liants essentiels

a) au moins un polymère P, formé par
≥ 0,1 et ≤ 10 % en poids d'au moins un composé monoéthyléniquement insaturé contenant au moins un groupe contenant du silicium, un groupe époxy, hydroxyalkyle, N-méthylol ou carbonyle et/ou au moins un composé qui comprend au moins deux groupes éthyléniquement insaturés non conjugués (monomères A),
≥ 0 et < 5 % en poids d'au moins un acide monocarboxylique en $C_3$ à $C_6$ et/ou dicarboxylique en $C_4$-$C_6$ monoéthyléniquement insaturé, ainsi que leurs sels et anhydrides (monomères B), et
> 85 et ≤ 99,9 % en poids d'autres composés éthyléniquement insaturés différents des monomères A et B, le type et la quantité de ceux-ci étant choisis de sorte qu'un polymère formé uniquement à partir de ces composés éthyléniquement insaturés sous forme copolymérisée présenterait une température de transition vitreuse dans la plage ≥ 10 et ≤ 50 °C (monomères C),
sous forme copolymérisée, la somme des quantités des monomères A à C étant de 100 % en poids, et
b) au moins un composé de lignine L, dont la quantité est déterminée de manière à être de ≥ 10 et ≤ 60 parties en poids pour 100 parties en poids du polymère P.

**2.** Composition aqueuse de liant selon la revendication 1, dans laquelle ledit au moins un monomère A est choisi dans le groupe comprenant le N-méthylolacrylamide, le N-méthylolméthacrylamide, l'acrylate de glycidyle, le méthacrylate de glycidyle, l'acrylate de 2-hydroxyéthyle, le méthacrylate de 2-hydroxyéthyle, le diacrylate de 1,4-butylène glycol, le méthacrylate d'allyle et/ou le divinylbenzène.

**3.** Composition aqueuse de liant selon l'une quelconque des revendications 1 ou 2, dans laquelle les monomères C sont choisis dans le groupe comprenant les diènes en $C_4$ à $C_9$ aliphatiques conjugués, les esters d'alcool vinylique et d'un acide monocarboxylique en $C_1$ à $C_{10}$, les acrylates d'alkyle en $C_1$ à $C_{10}$, les méthacrylates d'alkyle en $C_1$ à $C_{10}$, les nitriles d'acides monocarboxyliques en $C_3$ à $C_6$ éthyléniquement insaturés, les nitriles d'acides dicarboxyliques en $C_4$ à $C_6$ éthyléniquement insaturés, les acrylates et méthacrylates de cycloalkyle en $C_5$ à $C_{10}$, les maléinates de dialkyle en $C_1$ à $C_{10}$, et les fumarates de dialkyle en $C_1$ à $C_{10}$, et les monomères aromatiques de vinyle.

**4.** Composition aqueuse de liant selon l'une quelconque des revendications 1 à 3, dans laquelle le polymère P est utilisé sous la forme d'une dispersion aqueuse de polymère.

**5.** Composition aqueuse de liant selon la revendication 4, dans laquelle les particules polymères de la dispersion aqueuse de polymère présentent un diamètre de particule moyen en nombre ≥ 50 et ≤ 250 nm.

**6.** Composition aqueuse de liant selon l'une quelconque des revendications 1 à 5, dans laquelle le polymère P est formé par :

| | |
|---|---|
| ≥ 0,1 et ≤ 5 % en poids | de monomères A, |
| ≥ 0,1 et ≤ 4 % en poids | de monomères B et |
| ≥ 91 et ≤ 99,8 % en poids | de monomères C. |

**7.** Composition aqueuse de liant selon l'une quelconque des revendications 1 à 6, dans laquelle le polymère P est formé par :

≥ 0,5 et ≤ 3 % en poids de N-méthylolacrylamide, de N-méthylolméthacrylamide, d'acrylate de glycidyle, de méthacrylate de glycidyle, d'acrylate de 2-hydroxyéthyle, de méthacrylate de 2-hydroxyéthyle, de diacrylate de 1,4-butylène glycol, de méthacrylate d'allyle et/ou de divinylbenzène,
≥ 0,1 et ≤ 3 % en poids d'acide acrylique, d'acide méthacrylique, d'acide maléique, d'anhydride de l'acide maléique et/ou d'acide itaconique,
≥ 94 et ≤ 99,4 % en poids d'acrylate de 2-éthylhexyle, d'acrylate de n-butyle, d'acrylonitrile, de 1,4-butadiène, d'acrylate d'éthyle, d'acétate de vinyle, de méthacrylate de méthyle, de styrène et/ou de méthacrylate de tert.-butyle.

**8.** Composition aqueuse de liant selon l'une quelconque des revendications 1 à 7, dans laquelle un sulfonate de lignine est utilisé en tant que composé de lignine L.

**9.** Composition aqueuse de liant selon la revendication 8, dans laquelle le sulfonate de lignine a été obtenu à partir de bois de conifères.

**10.** Composition aqueuse de liant selon l'une quelconque des revendications 1 à 9, dans laquelle ≥ 20 et ≤ 45 parties en poids S de composé de lignine L sont utilisées pour 100 parties en poids de polymère P.

**11.** Procédé de fabrication d'une composition aqueuse de liant selon l'une quelconque des revendications 4 à 10, **caractérisé en ce que** la quantité totale du composé de lignine L est ajoutée à la dispersion aqueuse du polymère P.

**12.** Utilisation d'une composition aqueuse de liant selon l'une quelconque des revendications 1 à 11 en tant que liant pour substrats granulaires et/ou fibreux.

**13.** Procédé de fabrication d'un corps moulé à partir de substrats granulaires et/ou fibreux, **caractérisé en ce qu'**une composition aqueuse de liant selon l'une quelconque des revendications 1 à 10 est appliquée sur le substrat granulaire et/ou fibreux, le substrat granulaire et/ou fibreux ainsi traité est éventuellement mis en forme, puis le substrat granulaire et/ou fibreux ainsi obtenu est soumis à une étape de traitement thermique à une température ≥ 110 °C.

**14.** Procédé de fabrication d'un corps moulé selon la revendication 13, **caractérisé en ce que** la quantité de composition aqueuse de liant est choisie de sorte que, pour 100 g de substrat granulaire et/ou fibreux, ≥ 1 et ≤ 100 g de liant (correspondant à la somme des quantités totales de polymère P et de composé de lignine L) soit appliqué.

**15.** Corps moulé pouvant être obtenu par un procédé selon l'une quelconque des revendications 13 ou 14.

**16.** Utilisation de corps moulés selon la revendication 15 pour la fabrication de bandes de couverture bitumées.

**17.** Bandes de couverture bitumées fabriquées en utilisant des corps moulés selon la revendication 15.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4076917 A
- EP 445578 A
- EP 583086 A
- EP 651088 A
- EP 672920 A
- DE 2214450 A
- US 5143582 A
- US 200482689 A
- WO 9909100 A
- WO 1034645 A
- EP 11154347 A
- US 2009170978 A
- US 2011159768 A
- EP 2199320 A
- WO 2008150647 A
- DE 4003422 A
- EP 771328 A
- DE 19624299 A
- DE 19621027 A
- DE 19741184 A
- DE 19741187 A
- DE 19805122 A
- DE 19828183 A
- DE 19839199 A
- DE 19840586 A
- DE 19847115 A
- US 4269749 A
- US 2520959 A
- US 3397165 A
- US 3360599 A
- US 3238173 A
- US 3726824 A
- US 3734686 A
- US 6207756 A


### In der Beschreibung aufgeführte Nicht-Patentliteratur


- **G. KANIG.** *Kolloid-Zeitschrift & Zeitschrift für Polymere,* vol. 190 (1), 1
- Ullmann's Ecyclopedia of Industrial Chemistry. VCH Weinheim, 1992, vol. A21, 169
- **J. BRANDRUP ; E.H. IMMERGUT.** Polymer Handbook. J. Wiley, 1966
- POLYMER HANDBOOK. J.Wiley, 1975
- POLYMER HANDBOOK. J. Wiley, 1989
- **T.G. FOX.** *Bull. Am. Phys. Soc.,* 1956, vol. 1, 123
- Ullmann's Encyclopädie der technischen Chemie. Verlag Chemie, 1980, vol. 19, 18
- Emulsionspolymerisation in Encyclopedia of Polymer Science and Engineering. 1987, vol. 8, 659 ff
- **D.C. BLACKLEY.** *High Polymer Latices,* 1966, vol. 1, 35 ff
- **H. WARSON.** *The Applications of Synthetic Resin Emulsions,* 1972, 246 ff
- **D. DIEDERICH.** *Chemie in unserer Zeit,* 1990, vol. 24, 135-142
- Emulsion Polymerisation. Interscience Publishers, 1965
- **F. HÖLSCHER.** Dispersionen synthetischer Hochpolymerer. Springer-Verlag, 1969
- Methoden der organischen Chemie. **HOUBEN-WEYL.** Makromolekulare Stoffe. Georg-Thieme-Verlag, 1961, vol. XIV/1, 411-420
- Methoden der organischen Chemie. **HOUBEN-WEYL.** Makromolekulare Stoffe. Georg-Thieme-Verlag, 1961, vol. XIV/1, 192-208
- **H. STACHE.** Tensid-Taschenbuch. Carl-Hanser-Verlag, 1981
- **MCCUTCHEON'S.** Emulsifiers & Detergents. MC Publishing Company, 1989
- **J. BRANDRUP ; E.H. IMMERGUT.** Polymerhandbook. John Wiley & Sons, 1989, 133-141
- **S.E. HARDING et al.** Analytical Ultracentrifugation in Biochemistry and Polymer Science. Royal Society of Chemistry, 1992
- **W. MÄCHTLE.** Analysis of Polymer Dispersions with an Eight-Cell-AUC-Multiplexer. *High Resolution Particle Size Distribution and Density Gradient Techniques,* 147-175
- **ECKERSLEY et al.** *Am. Chem. Soc., Div. Polymer Chemistry,* 1977, vol. 38, 2
- *CHEMICAL ABSTRACTS,* 8061-52-7
- *CHEMICAL ABSTRACTS,* 8061-51-6
- *CHEMICAL ABSTRACTS,* 8061-54-9
- *CHEMICAL ABSTRACTS,* 8061-53-8
- *Ullmann's Encyclopedia of Industrial Chemistry,* 1992, vol. A21, 169